# EUROPEAN PATENT APPLICATION

(11) **EP 3 937 471 A1**
(43) Date of publication of application: **12.01.2022**
(21) Application number: 20784230.3
(22) Date of filing: 31.03.2020
(51) Int. Cl.: H04L 29/12, H04W 84/12

(54) **METHOD FOR ACQUIRING INTERNET PROTOCOL IP ADDRESS OF TERMINAL DEVICE, DEVICE, AND SYSTEM**

(30) Priority: 31.03.2019 CN 201910254751
(71) Applicant: Huawei Technologies Co., Ltd., Shenzhen, Guangdong 518129 (CN)
(72) Inventor: WANG, Yuan, Shenzhen, Guangdong 518129 (CN); ZHOU, Runze, Shenzhen, Guangdong 518129 (CN); CHEN, Zhongping, Shenzhen, Guangdong 518129 (CN)
(74) Representative: Körber, Martin Hans
(86) International application number: PCT/CN2020/082489
(87) International publication number: WO 2020/200207

(57) **Abstract**

A method for obtaining an internet protocol IP address of a terminal device, a device, and a system are provided, to resolve a problem in a conventional technology that a terminal device cannot obtain an IP address of a destination end. In this application, an application function network element may send a first event registration request to a capability exposure network element, where the first event registration request is used to request to obtain, from the capability exposure network element, an IP address of a terminal device in a group. Then, the application function network element receives a first event notification message from the capability exposure network element, where the first event notification message includes an IP address of a first terminal device in the group. After obtaining the IP address of the first terminal device, the application function network element may send a first message to another terminal device that is in the group and to which an IP address has been allocated, where the first message includes the IP address of the first terminal device, an identifier of the first terminal device, and a group identifier of the group. In this case, the terminal devices in the group can learn of the IP address of the another terminal device from each other.

## Description

### CROSS-REFERENCE TO RELATED APPLICATIONS

This application claims priority to Chinese Patent Application No. 201910254751.9, filed with the China National Intellectual Property Administration on March 31, 2019 and entitled "METHOD FOR OBTAINING INTERNET PROTOCOL IP ADDRESS OF TERMINAL DEVICE, DEVICE, AND SYSTEM", which is incorporated herein by reference in its entirety.

### TECHNICAL FIELD

This application relates to the field of communication technologies, and in particular, to a method for obtaining an internet protocol IP address of a terminal device, a device, and a system.

### BACKGROUND

In a 3rd generation partnership project (the 3rd generation partnership project, 3GPP) system, communication between terminal devices generally uses a "client-server (client-server)" mode. In this communication mode, information is forwarded between the terminal devices by using an application server on an external network.

Internet protocol (internet protocol, IP) communication is used as an example. An IP packet of a terminal device A is sent to the application server on the external network (for example, the Internet) by using a gateway. The application server obtains an identifier of a destination end of the IP packet of the terminal device A based on an application layer message in the IP packet of the terminal device A, to determine the destination end of the IP packet of the terminal device A. For example, the destination end of the IP packet of the terminal device A is a terminal device B. The application server reconstructs an IP packet, and sends the constructed IP packet to the terminal device B by using a gateway.

However, to implement direct information exchange between the terminal devices without relying on the application server on the external network, it is currently assumed that an IP packet exchanged between the terminal devices directly carries an IP address of the destination end, so that after receiving the IP packet, the gateway forwards the IP packet based on the IP address of the destination end. However, based on an existing mechanism, the terminal devices cannot obtain the IP address of the destination end, and cannot construct the IP packet that carries the IP address of the destination end, either.

### SUMMARY

This application provides a method for obtaining an internet protocol IP address of a terminal device, a device, and a system, to resolve a problem in a conventional technology that a terminal device cannot obtain an IP address of a destination end.

According to a first aspect, an embodiment of this application provides a method for obtaining an IP address of a terminal device. The method includes: An application function network element may send a first event registration request to a capability exposure network element, where the first event registration request is used to request to obtain, from the capability exposure network element, an IP address of a terminal device in a group. Then, the application function network element receives a first event notification message from the capability exposure network element, where the first event notification message includes an IP address of a first terminal device in the group. After obtaining the IP address of the first terminal device, the application function network element may send a first message to another terminal device that is in the group and to which an IP address has been allocated, where the first message includes the IP address of the first terminal device, an identifier of the first terminal device, and a group identifier of the group.

According to the foregoing method, the application function network element may obtain the IP address of the terminal device in the group from the capability exposure network element, and may further notify the another terminal device in the group of the IP address of the terminal device in the group, so that the terminal devices in the group can learn of the IP addresses from each other.

In a possible design, the first event registration request may include some information used to indicate the group. For example, the group identifier of the group, for example, a group identifier of the group at an application layer, may be included.

According to the foregoing method, that the first event registration request carries the group identifier of the group may relatively clearly indicate that the IP address of the terminal device in the group identified by the group identifier of the group is requested to be obtained.

In a possible design, the first event registration request may further carry related information of the terminal device in the group. For example, identifiers, for example, application layer identifiers, of one or more terminal devices in the group may be included, and the one or more terminal devices in the group include the first terminal device.

According to the foregoing method, identifiers of terminal devices in a group are carried, so that the terminal devices included in the group may be clearly indicated, and the capability exposure network element can more accurately obtain IP addresses of the terminal devices in the group.

In a possible design, the first event notification message may include only the IP address of the first terminal device, and may further include either or both of the following: the identifier of the first terminal device and the group identifier of the group.

According to the foregoing method, the identifier of the first terminal device or the group identifier of the group may clearly indicate a terminal device to which the IP address carried in the first event notification message belongs, or a group to which the terminal device with the IP address belongs.

In a possible design, the first event registration request may further carry first indication information, used to indicate a response manner of the capability exposure network element. For example, when the first indication information indicates the capability exposure network element to return IP addresses of all terminal devices in the group at a time (one-time response), or indicates the capability exposure network element to return, when obtaining IP addresses of any one or more terminal devices in the group, the obtained IP addresses of the terminal devices (one-by-one response).

According to the foregoing method, a feedback manner expected by the application function network element may be more conveniently indicated to the capability exposure network element by using the first indication information. The method is applicable to different application scenarios.

In a possible design, if the first indication information indicates the capability exposure network element to return the IP addresses of all the terminal devices in the group at a time, the first event notification message includes the IP addresses of all the terminal devices in the group.

According to the foregoing method, in the one-time response manner, the application function network element may obtain the IP addresses of all the terminal devices in the group at a time, so that signaling interaction can be effectively reduced.

In a possible design, before sending the first message to the another terminal device that is in the group and to which the IP address has been allocated, the application function network element needs to determine terminal devices that are in the group and to which IP addresses have been allocated. For example, the application function network element may locally store IP addresses of terminal device and a group to which each of the terminal devices belongs. The application function network element may determine, in the locally stored terminal devices to which the IP addresses have been allocated, the another terminal device that is in the group and to which the IP address has been allocated. A quantity of the another terminal device is not limited in this application, and may be greater than or equal to one.

According to the foregoing method, the application function network element may clearly learn of allocation of the IP addresses of the terminal devices in the group, to ensure that the IP addresses of the terminal devices in the group can be indicated to the another terminal device in the group in a timely and accurate manner.

In a possible design, when sending the first message to the another terminal device in the group to which the first terminal device belongs, the application function network element may send the first message to the another terminal device by using a user plane network element corresponding to the another terminal device. If there are a plurality of terminal devices, the application function network element may use a multicast manner or may use a unicast manner.

According to the foregoing method, the application function network element may conveniently send the IP address of the first terminal device to the another terminal device.

In a possible design, the application function network element sends a second message to the first terminal device, where the second message includes the IP address of the another terminal device in the group, and may further include an identifier of the another terminal device and the group identifier of the group.

According to the foregoing method, the application function network element may further indicate the IP address of the another terminal device in the group to the first terminal device, so that the first terminal device can learn of the IP address of the another terminal device in the group, and further ensure that the terminal devices in the group can learn of the IP addresses from each other.

In a possible design, the first message is an application layer message.

According to a second aspect, an embodiment of this application provides a method for obtaining an IP address of a terminal device. The method includes: A capability exposure network element may receive a first event registration request from an application function network element, where the first event registration request is used to request to obtain an IP address of a terminal device in a group. Then, the capability exposure network element obtains an IP address of a first terminal device in the group from a core network element; and then sends a first event notification message to the application function network element, where the first event notification message includes the IP address of the first terminal device. The first terminal device may be any terminal device in the group.

According to the foregoing method, after receiving the first event registration request, the capability exposure network element may feed back the IP address of the first terminal device to the application function network element, so that the application function network element may obtain the IP address of the first terminal device in time, and notify another terminal device in the group of the IP address of the first terminal device.

In a possible design, when obtaining the IP address of the first terminal device from the core network element, the capability exposure network element may send query information, or may use another manner. For example, the capability exposure network element may send a second event registration request to the core network element, where the second event registration request is used to request to obtain the IP address of the terminal device in the group. Then, the capability exposure network element receives a second event notification message from the core network element, where the second event notification message includes the IP address of the first terminal device.

According to the foregoing method, the capability exposure network element may conveniently and quickly obtain the IP address of the first terminal device by interacting with the core network element, and feed back the IP address of the first terminal device to the application function network element, so that the application function network element can send the IP address of the first terminal device to the another terminal device in the group in time.

In a possible design, the first event registration request may include some information used to indicate the group. For example, the group identifier of the group, for example, a group identifier of the group at an application layer, may be included.

According to the foregoing method, that the first event registration request carries the group identifier of the group may relatively clearly indicate that the IP address of the terminal device in the group identified by the group identifier of the group is requested to be obtained.

In a possible design, the first event registration request may further carry the following related information of the terminal device in the group. For example, identifiers such as application layer identifiers of one or more terminal devices in the group may be carried, and the identifiers of the terminal devices in the group include an identifier of the first terminal device.

According to the foregoing method, identifiers of terminal devices in a group are carried, so that the terminal devices included in the group may be clearly indicated, and the capability exposure network element can more accurately obtain IP addresses of the terminal devices in the group.

In a possible design, the first event registration request further includes first indication information, used to indicate a response manner of the capability exposure network element. For example, when the first indication information indicates the capability exposure network element to return IP addresses of all terminal devices in the group at a time (one-time response), or indicates the capability exposure network element to return, when obtaining IP address of any terminal device in the group, the obtained IP address of the terminal device (one-by-one response).

According to the foregoing method, a feedback manner expected by the application function network element may be more conveniently indicated to the capability exposure network element by using the first indication information. The method is applicable to different application scenarios.

In a possible design, if the first indication information indicates the capability exposure network element to return the IP addresses of all the terminal devices in the group at a time, the capability exposure network element sends the first event notification message to the application function network element after obtaining the IP addresses of all the terminal devices in the group from the core network element, where the first event notification message includes the IP addresses of all the terminal devices in the group.

According to the foregoing method, in the one-time response manner, the capability exposure network element may feed back the IP addresses of all the terminal devices in the group at a time, so that signaling interaction can be effectively reduced, and information transmission efficiency can be improved.

In a possible design, if the first event registration request does not include one or more identifiers of one or more terminal devices in the group, the capability exposure network element may obtain the identifiers of the terminal devices in the group from a unified data management network element based on the group identifier of the group.

According to the foregoing method, the capability exposure network element may conveniently learn of the terminal devices in the group.

In a possible design, when the capability exposure network element sends the second event registration request to the core network element, because the core network element can learn of only a group identifier of the group at a network layer, if the first event registration request includes a group identifier of the group at an application layer, the capability exposure network element needs to perform some identifier conversion. For example, the capability exposure network element may convert the group identifier of the group at the application layer into the group identifier of the group at the network layer, and then, send the second event registration request to the core network element, where the second event registration request includes the group identifier of the group at the network layer.

According to the foregoing method, the group identifier of the group at the application layer is converted into the group identifier of the group at the network layer. In addition, the second event registration request carries the group identifier of the group at the network layer. In this case, the core network element can accurately determine, based on the group identifier of the group at the network layer, a group to which the terminal device with the IP address requested by the second event registration request belongs.

In a possible design, when the capability exposure network element sends the second event registration request to the core network element, because the core network element can learn of only a network layer identifier of the terminal device, if the first event registration request further includes an application layer identifier of the terminal device in the group, the capability exposure network element needs to perform some identifier conversion. For example, the capability exposure network element may convert the application layer identifier of the terminal device in the group into the network layer identifier, and convert the group identifier of the group at the application layer into the group identifier of the group at the network layer. The network layer identifier is a network layer identifier of the terminal device. Then, the capability exposure network element sends the second event registration request to the core network element, where the second event registration request includes the network layer identifier of the terminal device in the group and the group identifier of the group at the network layer.

According to the foregoing method, the second event registration request carries the group identifier of the group at the network layer and the network layer identifier of the terminal device, so that the core network element can accurately determine, based on the group identifier of the group at the network layer and the network layer identifier of the terminal device, a terminal device to which an IP address requested by the second event registration request belongs, and a group to which the terminal device belongs.

In a possible design, the second event registration request may further carry second indication information, used to indicate a response manner of the core network element. For example, when the second indication information indicates the core network element to return the IP addresses of all the terminal devices in the group at a time (one-time response), or indicates the core network element to return, when obtaining the IP addresses of the any one or more terminal devices in the group, the obtained IP addresses of the terminal devices (one-by-one response).

According to the foregoing method, a feedback manner expected by the capability exposure network element may be more conveniently indicated to the core network element by using the second indication message, so that the method can be extended to more application scenarios.

In a possible design, if the second indication information indicates the core network element to return the IP addresses of all the terminal devices in the group at a time, the second event notification message includes the IP addresses of all the terminal devices in the group.

According to the foregoing method, in the one-time response manner, the capability exposure network element may obtain the IP addresses of all the terminal devices in the group at a time, so that signaling interaction can be effectively reduced.

In a possible design, the second event notification message may further carry related information of the terminal device in the group. For example, either or both of the following: the identifier of the first terminal device, for example, the network layer identifier, and the identifier of the group, for example, the group identifier of the group at the network layer may be included.

According to the foregoing method, the identifier of the first terminal device or the group identifier of the group may be used to clearly indicate a terminal device to which the IP address carried in the second event notification message belongs, or indicate a group to which the terminal device with the IP address belongs.

In a possible design, if the first event registration request does not include one or more identifiers of one or more terminal devices in the group, before sending the second event registration request to the core network element, the capability exposure network element may further obtain the identifiers (for example, application layer identifiers or the network layer identifiers) of the terminal devices in the group from a unified data management network element based on the group identifier.

According to the foregoing method, the capability exposure network element may determine the terminal devices included in the group and corresponding identification information.

In a possible design, after the capability exposure network element obtains the IP address of the first terminal device from the core network element, because the application function network element can learn of only the application layer identifier of the terminal device and the group identifier of the group at the application layer, if the first event registration request includes the application layer identifier of the terminal device in the group and/or the group identifier of the group at the application layer, the capability exposure network element needs to perform some identifier conversion. For example, the capability exposure network element may convert the network layer identifier of the first terminal device into the application layer identifier of the first terminal device, and/or convert the group identifier of the group at the network layer into the group identifier of the group at the application layer. Then, the capability exposure network element sends the first event notification message to the core network element, where the first event notification message includes either or both of the following: the identifier (for example, the application layer identifier) of the first terminal device and the group identifier of the group (the group identifier of the group at the application layer).

According to the foregoing method, the identifier of the first terminal device and/or the group identifier of the group may clearly indicate a terminal device to which the IP address carried in the first event notification message belongs, or a group to which the terminal device with the IP address carried in the first event notification message belongs.

According to a third aspect, an embodiment of this application provides a method for obtaining an IP address of a terminal device. The method includes: A core network element receives a second event registration request from a capability exposure network element, where the second event registration request is used to request to obtain an IP address of a terminal device in a group; and then, after determining an IP address of a first terminal device in the group, the core network element sends a second event notification message to the capability exposure network element, where the second event notification message includes the IP address of the first terminal device.

According to the foregoing method, the capability exposure network element interacts with the core network element, and the core network element may conveniently and quickly feed back the IP address of the first terminal device, so that the capability exposure network element may feed back the IP address of the first terminal device to the application function network element. Further, It can be ensured that the application function network element sends the IP address of the first terminal device to another terminal device in the group in time.

In a possible design, the second event registration request includes a group identifier of the group, for example, a group identifier of the group at a network layer.

According to the foregoing method, the second event registration request carries the group identifier of the group at the network layer, and the core network element may accurately determine, based on the group identifier of the group at the network layer, a group to which the terminal device with the IP address requested by the second event registration request belongs.

In a possible design, the second event registration request further includes an identifier, for example, a network layer identifier, of the terminal device in the group.

According to the foregoing method, the second event registration request carries the group identifier of the group and the identifier of the terminal device, so that the core network element can accurately determine a terminal device to which an IP address requested by the second event registration request belongs, and a group to which the terminal device belongs.

In a possible design, the second event registration request may further carry second indication information, used to indicate a response manner of the core network element. For example, when the second indication information indicates the core network element to return IP addresses of all terminal devices in the group at a time (one-time response), or indicates the core network element to return, when obtaining IP addresses of any terminal device in the group, the obtained IP address of the terminal device (one-by-one response).

According to the foregoing method, a feedback manner expected by the capability exposure network element may be more conveniently indicated to the core network element by using the second indication message, so that the method may be flexibly applied to different scenarios.

In a possible design, if the second indication information indicates the core network element to return the IP addresses of all the terminal devices in the group at a time, after determining the IP addresses of all the terminal devices in the group, the core network element sends the second event notification message to the capability exposure network element, where the second event notification message includes the IP addresses of all the terminal devices in the group.

According to the foregoing method, in the one-time response manner, the core network element may feed back the IP addresses of all the terminal devices in the group at a time, so that signaling interaction can be effectively reduced.

In a possible design, there are a plurality of manners for the core network element to determine the IP address of the first terminal device. For example, if the core network element is a session management network element, after receiving a session establishment request from the first terminal device, the session management network element allocates the IP address to the first terminal device, and further obtains the IP address of the first terminal device. The session establishment request is used to request to establish a group session of the group.

In a possible design, before the core network element sends the second event notification message to the capability exposure network element, the session management network element may determine whether the group identifier that is of the group at the network layer and that is carried in the second event registration request is consistent with a group identifier that is of the group at the network layer and that is carried in the session establishment request, or whether the network layer identifier that is of the terminal device in the group and that is carried in the second event registration request is consistent with a network layer identifier that is of the first terminal device and that is carried in the session establishment request, and send the second event notification message to the capability exposure network element when the identifiers are both consistent.

In a possible design, if the core network element is a unified data management network element, the unified data management network element may determine the IP address of the first terminal device based on subscription information of the first terminal device.

In a possible design, before sending the second event notification message to the capability exposure network element, the core network element first determines whether the group identifier that is of the group at the network layer and that is carried in the second event registration request is consistent with the group identifier that is of the group at the network layer and that is in the subscription information, or whether the network layer identifier that is of the terminal device in the group and that is carried in the second event registration request is consistent with the network layer identifier that is of the first terminal device and that is in the subscription information, and sends the second event notification message to the capability exposure network element when the identifiers are both consistent.

In a possible design, the second event notification message further includes either or both of the following: the network layer identifier of the first terminal device and the group identifier of the group at the network layer.

According to the foregoing method, the network layer identifier of the first terminal device or the group identifier of the group at the network layer may be used to clearly indicate a terminal device to which the IP address carried in the second event notification message belongs, or indicate a group to which the terminal device with the IP address belongs.

According to a fourth aspect, an embodiment of this application provides a method for obtaining an IP address of a terminal device. The method includes: A second terminal device receives a first message from an application function network element, where the first message includes a first IP address of a first terminal device, an identifier of the first terminal device, and a group identifier of a first group to which the first terminal device belongs; and the second terminal device may store a correspondence among the identifier of the first terminal device, the identifier of the first group to which the first terminal device belongs, and the first IP address of the first terminal device.

According to the foregoing method, the IP address may be locally recorded, so that subsequently, the second terminal device may conveniently interact with the first terminal device by using a group session of the first group.

In a possible design, the first terminal device may belong to a different group, for example, a second group, and the second terminal device may further receive a third message from the application function network element. The third message includes the identifier of the first terminal device, a group identifier of the second group to which the first terminal device belongs, and a second IP address of the first terminal device.

The second terminal device may store a correspondence between the identifier of the first terminal device, the group identifier of the second group to which the first terminal device belongs, and the second IP address of the first terminal device.

According to the foregoing method, the IP address may be locally recorded, so that subsequently, the second terminal device may conveniently interact with the first terminal device by using a group session of the second group.

In a possible design, if data needs to be sent to the first terminal device in the first group, an IP packet is sent to the first terminal device by using a user plane network element, where a destination end address of the IP packet is the first IP address of the first terminal device.

According to the foregoing method, the second terminal device obtains the IP address of the destination end, and when interacting with terminal devices in different groups, the second terminal device may directly send an IP packet by using the user plane network element without using a server on an external network, so that transmission efficiency of the IP packet can be improved.

In a possible design, before sending the IP packet to the first terminal device by using the user plane network element, the second terminal device may further obtain the first IP address of the first terminal device based on the identifier of the first terminal device and the group identifier of the first group to which the first terminal device belongs.

According to a fifth aspect, an embodiment of this application further provides a communication apparatus. The communication apparatus is applied to an application function network element. For beneficial effects, refer to the descriptions of the first aspect. Details are not described herein again. The apparatus has a function of implementing actions in the method example in the first aspect. The function may be implemented by hardware, or may be implemented by hardware by executing corresponding software. The hardware or software includes one or more modules corresponding to the foregoing functions. In a possible design, a structure of the apparatus includes a sending unit, a processing unit, and a receiving unit. The units may execute corresponding functions in the method example in the first aspect. For details, refer to the detailed descriptions in the method example. Details are not described herein again.

According to a sixth aspect, an embodiment of this application further provides a communication apparatus. The communication apparatus is applied to a capability exposure network element. For beneficial effects, refer to the descriptions of the second aspect. Details are not described herein again. The apparatus has a function of implementing actions in the method example in the second aspect. The function may be implemented by hardware, or may be implemented by hardware by executing corresponding software. The hardware or software includes one or more modules corresponding to the foregoing functions. In a possible design, a structure of the apparatus includes a receiving unit, a processing unit, and a sending unit. The units may execute corresponding functions in the method example in the second aspect. For details, refer to the detailed descriptions in the method example. Details are not described herein again.

According to a seventh aspect, an embodiment of this application further provides a communication apparatus. The communication apparatus is applied to a core network element. For beneficial effects, refer to the descriptions of the third aspect. Details are not described herein again. The apparatus has a function of implementing actions in the method example in the third aspect. The function may be implemented by hardware, or may be implemented by hardware by executing corresponding software. The hardware or software includes one or more modules corresponding to the foregoing functions. In a possible design, a structure of the apparatus includes a receiving unit, a processing unit, and a sending unit. The units may execute corresponding functions in the method example in the third aspect. For details, refer to the detailed descriptions in the method example. Details are not described herein again.

According to an eighth aspect, an embodiment of this application further provides a communication apparatus. The communication apparatus is applied to a second terminal device. For beneficial effects, refer to the descriptions of the fourth aspect. Details are not described herein again. The apparatus has a function of implementing actions in the method example in the fourth aspect. The function may be implemented by hardware, or may be implemented by hardware by executing corresponding software. The hardware or software includes one or more modules corresponding to the foregoing functions. In a possible design, a structure of the apparatus includes a receiving unit, a processing unit, and a sending unit. The units may execute corresponding functions in the method example in the fourth aspect. For details, refer to the detailed descriptions in the method example. Details are not described herein again.

According to a ninth aspect, an embodiment of this application further provides a communication apparatus. The communication apparatus is applied to an application function network element. For beneficial effects, refer to the descriptions of the first aspect. Details are not described herein again. A structure of the communication apparatus includes a processor and a memory. The processor is configured to support a terminal in performing a corresponding function in the method in the first aspect. The memory is coupled to the processor, and stores program instructions and data that are necessary for the communication apparatus. The structure of the communication apparatus further includes a communication interface, configured to communicate with another device.

According to a tenth aspect, an embodiment of this application further provides a communication apparatus. The communication apparatus is applied to a capability exposure network element. For beneficial effects, refer to the descriptions of the second aspect. Details are not described herein again. A structure of the communication apparatus includes a processor and a memory. The processor is configured to support a terminal in performing a corresponding function in the method in the second aspect. The memory is coupled to the processor, and stores program instructions and data that are necessary for the communication apparatus. The structure of the communication apparatus further includes a communication interface, configured to communicate with another device.

According to an eleventh aspect, an embodiment of this application further provides a communication apparatus. The communication apparatus is applied to a core network element. For beneficial effects, refer to the descriptions of the third aspect. Details are not described herein again. A structure of the communication apparatus includes a processor and a memory. The processor is configured to support a terminal in performing a corresponding function in the method in the third aspect. The memory is coupled to the processor, and stores program instructions and data that are necessary for the communication apparatus. The structure of the communication apparatus further includes a communication interface, configured to communicate with another device.

According to a twelfth aspect, an embodiment of this application further provides a communication apparatus. The communication apparatus is applied to a second terminal device. For beneficial effects, refer to the descriptions of the fourth aspect. Details are not described herein again. A structure of the communication apparatus includes a processor and a memory. The processor is configured to support a terminal in performing a corresponding function in the method in the fourth aspect. The memory is coupled to the processor, and stores program instructions and data that are necessary for the communication apparatus. The structure of the communication apparatus further includes a transceiver, configured to communicate with another device.

According to a thirteenth aspect, an embodiment of this application further provides a communication system. For beneficial effects, refer to descriptions of the foregoing aspects. Details are not described herein again. The communication system includes a capability exposure network element and a core network element.

The capability exposure network element is configured to: receive a first event registration request from an application function network element, where the first event registration request is used to request to obtain an internet protocol IP address of a terminal device in a group; and send a second event registration request to the core network element, where the second event registration request is used to request to obtain the IP address of the terminal device in the group.

The core network element is configured to: receive the second event registration request; and send a second event notification message to the capability exposure network element after determining the IP address of the terminal device in the group, where the second event notification message includes the IP address of the terminal device in the group.

The capability exposure network element is further configured to: receive the second event notification message, and send a first event notification message to the application function network element, where the first event notification message includes the IP address of the terminal device in the group.

In a possible design, the first event registration request includes a group identifier of the group, for example, a group identifier of the group at an application layer.

In a possible design, the first event registration request includes one or more identifiers of one or more terminal devices in the group, for example, application layer identifiers of the terminal devices.

In a possible design, the first event notification message includes either or both of the following: the application layer identifiers of the terminal devices and the group identifier of the group.

In a possible design, the first event registration request includes first indication information, and the first indication information indicates the capability exposure network element to return IP addresses of all terminal devices in the group at a time, or indicates the capability exposure network element to return, when obtaining IP addresses of any one or more terminal devices in the group, the obtained IP addresses of the terminal devices.

In a possible design, when the first indication information indicates the capability exposure network element to return the IP addresses of all the terminal devices in the group at a time, the capability exposure network element sends the first event notification message to the application function network element after obtaining the IP addresses of all the terminal devices in the group from the core network element, where the first event notification message includes the IP addresses of all the terminal devices in the group.

In a possible design, the communication system may further include the application function network element. The application function network element may send the first event registration request to the capability exposure network element, and may further receive the first event notification message; and send a first message to the terminal device that is in the group and to which the IP address has been allocated, where the first message includes an IP address of another terminal device in the group, an identifier of a first terminal device, and the group identifier of the group.

In a possible design, the second event registration request includes the group identifier of the group, for example, a group identifier of the group at a network layer.

In a possible design, the second event registration request further includes one or more identifiers of one or more terminal devices, for example, network layer identifiers of the terminal devices, and the network layer identifiers are network layer identifiers of the terminal devices.

In a possible design, the group identifier of the group is a group identifier of the group at the application layer, and when the capability exposure network element sends the second event registration request to the core network element, the capability exposure network element may convert the group identifier of the group at the application layer into the group identifier of the group at the network layer; and send the second event registration request to the core network element, where the second event registration request includes the group identifier of the group at the network layer.

In a possible design, if the first event registration request does not include the identifiers of the one or more terminal devices in the group, before sending the second event registration request to the core network element, the capability exposure network element may further obtain an identifier of the terminal device in the group from a unified data management network element based on the group identifier.

In a possible design, the group identifier of the group is the group identifier of the group at the application layer, the identifiers of the one or more terminal devices in the group are application layer identifiers, and when sending the second event registration request to the core network element, the capability exposure network element may convert the application layer identifiers of the one or more terminal devices in the group into the network layer identifiers of the terminal devices, and convert the group identifier of the group at the application layer into the group identifier of the group at the network layer. Then, the capability exposure network element sends the second event registration request to the core network element, where the second event registration request includes the network layer identifiers of the one or more terminal devices in the group and the group identifier of the group at the network layer.

In a possible design, the second event registration request includes second indication information, and the second indication information indicates the core network element to return the IP addresses of all the terminal devices in the group at a time, or indicates the core network element to return, when obtaining the IP addresses of the any one or more terminal devices in the group, the obtained IP addresses of the terminal devices.

In a possible design, if the second indication information indicates the core network element to return the IP addresses of all the terminal devices in the group at a time, after determining the IP addresses of all the terminal devices in the group, the core network element sends a second event notification message to the capability exposure network element, where the second event notification message includes the IP addresses of all the terminal devices in the group.

In a possible design, if the core network element is a session management network element, when the core network element determines an IP address of the first terminal device, the session management network element may allocate the IP address to the first terminal device after receiving a session establishment request from the first terminal device, where the session establishment request is used to request to establish a group session of the group.

In a possible design, if the core network element is the session management network element, when the core network element sends the second event notification message to the capability exposure network element, the core network element determines that the group identifier that is of the group at the network layer and that is carried in the second event registration request is consistent with a group identifier that is of the group at the network layer and that is carried in the session establishment request, or that the network layer identifier that is of the terminal device in the group and that is carried in the second event registration request is consistent with a network layer identifier that is of the terminal device and that is carried in the session establishment request, and then, the core network element sends the second event notification message to the capability exposure network element.

In a possible design, if the core network element is a unified data management network element, the unified data management network element may determine the IP address of the first terminal device based on subscription information of the first terminal device.

In a possible design, if the core network element is the unified data management network element, when the core network element sends the second event notification message to the capability exposure network element, the unified data management network element determines that the group identifier that is of the group at the network layer and that is carried in the second event registration request is consistent with a group identifier that is of the group at the network layer and that is in the subscription information, or that the network layer identifier that is of the terminal device in the group and that is carried in the second event registration request is consistent with a network layer identifier that is of the terminal device and that is in the subscription information, and then the unified data management network element sends the second event notification message to the capability exposure network element.

In a possible design, the second event notification message further includes either or both of the following: the identifier of the terminal device and the group identifier of the group.

In a possible design, before sending the first message to the another terminal device that is in the group and to which the IP address has been allocated, the application function network element determines the another terminal device that is in the group and to which the IP address has been allocated.

In a possible design, when sending the first message to the terminal device in the group to which the first terminal device belongs, the application function network element sends the first message to the terminal device by using a user plane network element corresponding to the terminal device.

In a possible design, the first message is an application layer message.

According to a fourteenth aspect, this application further provides a computer-readable storage medium. The computer-readable storage medium stores instructions; and when the instructions are run on a computer, the computer is enabled to perform the methods in the foregoing aspects.

According to a fifteenth aspect, this application further provides a computer program product including instructions. When the computer program product runs on a computer, the computer is enabled to perform the methods in the foregoing aspects.

According to a sixteenth aspect, this application further provides a computer chip. The chip is connected to a memory. The chip is configured to read and execute a software program stored in the memory, to perform the methods in the foregoing aspects.

### BRIEF DESCRIPTION OF DRAWINGS

FIG. 1 is a schematic architectural diagram of a communication system according to this application;
FIG. 2 is a schematic diagram of a method for obtaining an IP address of a terminal device according to this application;
FIG. 3 is a flowchart of a method for obtaining an IP address of a terminal device according to this application;
FIG. 4 is a flowchart of a method for obtaining an IP address of a terminal device according to this application;
FIG. 5 is a flowchart of a method for obtaining an IP address of a terminal device according to this application;
FIG. 6 is a flowchart of a method for obtaining an IP address of a terminal device according to this application;
FIG. 7 is a schematic structural diagram of a communication apparatus according to this application;
FIG. 8 is a schematic structural diagram of a communication apparatus according to this application;
FIG. 9 is a schematic structural diagram of a communication apparatus according to this application;
FIG. 10 is a schematic structural diagram of a communication apparatus according to this application;
FIG. 11 is a schematic structural diagram of a communication apparatus according to this application;
FIG. 12 is a schematic structural diagram of a communication apparatus according to this application; and
FIG. 13 is a schematic structural diagram of a communication system according to this application.

### DESCRIPTION OF EMBODIMENTS

This application provides a method for obtaining an IP address of a terminal device, a device, and a system, to resolve a problem in a conventional technology that a terminal device cannot learn of an IP address of a destination end. The terms "system" and "network" in the embodiments of this application may be used interchangeably. "At least one" refers to one or more, and "a plurality of' refers to two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof indicates any combination of the following, and includes any combination of one or more of the following. In addition, unless otherwise stated, in the embodiments of this application, ordinal numbers such as "first" and "second" are used to distinguish between a plurality of objects, and are not intended to limit an order, a time sequence, a priority, or importance of the plurality of objects. For example, a first priority criterion and a second priority criterion are merely used to distinguish between different criteria, but do not indicate different content, priorities, importance, or the like of the two criteria.

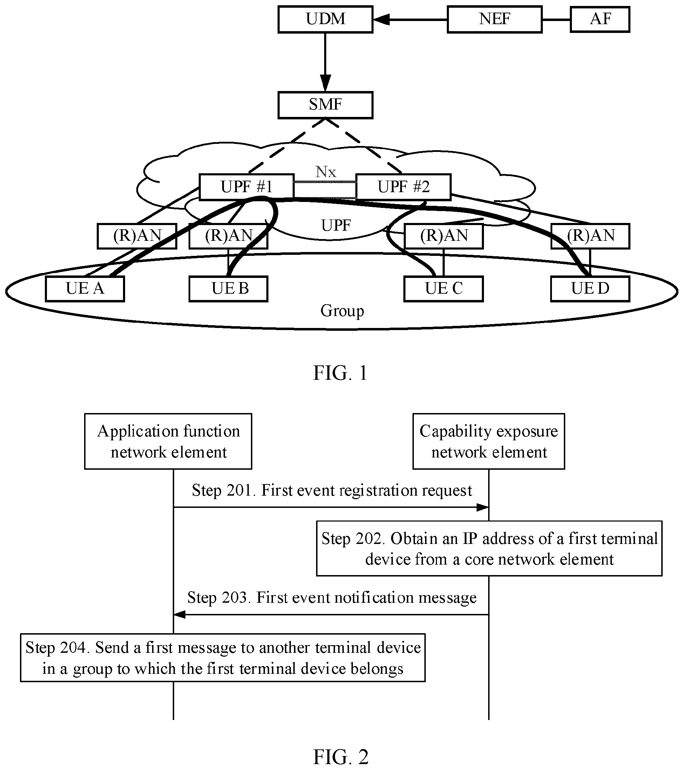

FIG. 1 is a schematic diagram of a specific network architecture to which this application is applicable. The network architecture is a 5G network architecture. Network elements in the 5G architecture include a terminal device. In FIG. 1, an example in which the terminal device is UE is used. The network architecture further includes a radio access network (radio access network, RAN), an access and mobility management function (access and mobility management function, AMF) network element, a session management function (session management function, SMF) network element, a user plane function (user plane function, UPF) network element, a unified data management (unified data management, UDM) network element, an application function (application function, AF) network element, a capability exposure network element (e.g. network exposure function, NEF), and the like.

A main function of the RAN is to control a user to access a mobile communication network in a wireless manner. The RAN is a part of a mobile communication system, and implements a radio access technology. Conceptually, the RAN camps between devices (such as mobile phones, computers, or any remote controls) and provides a connection to a core network of the devices.

The AMF network element is responsible for access management and mobility management of a terminal. In actual application, the AMF network element includes a mobility management function of an MME in an LTE network architecture, and further includes an access management function.

The SMF network element is responsible for session management, for example, session establishment of a user. In the embodiments of this application, the SMF network element may allocate an IP address to a terminal device, and may further send the allocated IP address to the UDM network element, so that the UDM network element may update subscription information of the terminal device, and include the IP address of the terminal device in the subscription information.

The UPF network element is a function network element of a user plane, and is mainly responsible for a connection to an external network. The UPF network element includes related functions of an LTE serving gateway (serving gateway, SGW) and an LTE public data network gateway (public data network gateway, PDN-GW). In the embodiments of this application, the UPF network element may be considered as including a plurality of logical function entities configured to implement path management. In the network architecture shown in FIG. 1, UPF #1 and UPF #2 represent logical function entities for path management. In the network architecture shown in FIG. 1, UE A, UE B, UE C, and UE D are four UEs included in a group. The UE A and the UE B are connected to the UPF #1 by using a RAN. Each of the UE A and the UE B corresponds to one port of the UPF #1. For example, the UE A corresponds to one port that is of the UPF # 1 and that has a port number of A, and the UE B corresponds to one port that is of the UPF #1 and that has a port number of B. The UE C and the UE D are connected to the UPF #2 by using a RAN. Each of the UE C and the UE D corresponds to one port of the UPF #2. For example, the UE C corresponds to one port that is of the UPF #2 and that has a port number of C, and the UE D corresponds to one port that is of the UPF #2 and that has a port number of D. The UPF #1 and the UPF #2 may forward an IP packet. For example, the UPF #1 may determine, based on an IP address and the port number A of the UPF #1 in a destination end address of an IP packet from the Internet, that the IP packet needs to be sent to the UE A.

However, in the manners of the embodiments of this application, the UEs may learn of the IP address of the UE from each other, so that data or a packet sent by the UE A or the UE B may be sent to the UE C or the UE D without using an external server. For example, if the UE A expects to communicate with the UE B, the UE A may directly fill a destination IP address of the UE B in a destination address segment in an IP packet header, and send an IP packet to the UPF # 1. The UPF # 1 determines the UE B based on the destination IP address, and the UPF # 1 directly sends the packet to the UE B.

The UDM network element may store subscription information of a user, and implements a function similar to that of a 4G HSS. In the embodiments of this application, the UDM stores session context of the UE.

The AF network element may be a third-party application control platform, or may be a device of an operator. For example, the AF network element may be a group server, and may be configured to create a group, for example, determine a group identifier of the group and group members of the group. The AF network element may be a function entity serving another group server, and may be a server and the like that stores IP addresses of the group members of the group (which may also be referred to as terminal devices in the group), and may further obtain the group identifier of the group and a group member list in the group from the group server. In the embodiments of this application, the AF network element may subscribe to a registration event by using the NEF network element, that is, send an event registration request (where a first event registration request is used as an example in the embodiments of this application) to the NEF network element, to request to obtain IP addresses of all group members or an IP address of a specific group member of the group. In addition, after obtaining the IP addresses of all the group members or the IP address of the specific group member of the group from the NEF network element, the AF network element may store the IP addresses/IP address, query another group member that is of the group and to which an IP address has been allocated, and send the IP addresses/IP address to the another group member to which the IP address has been allocated.

The NEF network element exposes a capability and an event of another network element to a third-party partner or the AF network element. The NEF network element provides the AF network element with a method for securely providing information to a 3rd generation partnership project (3rd generation partnership project, 3GPP) network, and can authenticate, authorize, and assist in restricting the AF network element. In addition, the NEF network element may further convert information exchanged by the AF network element and information exchanged by the core network element. In the embodiments of this application, the NEF network element receives an event registration request that is used by the AF network element to request an IP address of a group member of a group. After obtaining an IP address of any group member or IP addresses of all group members of the group from the core network element (such as the SMF network element or the UDM network element), the NEF network element sends, to the AF network element, an event registration notification message that carries the IP address, to notify the AF network element of the IP address of the group member of the group.

Although not shown in the figure, the network architecture shown in FIG. 1 may further include a unified data repository (unified data repository, UDR) network element. The UDR network element is mainly configured to store user-related subscription data, policy data, structured data for exposure, and application data. Generally, the UDR network element may be considered as a part of the UDM network element. The UDR network element may be deployed independently. The UDM network element manages, through a data interface, user data stored in the UDR network element.

The terminal device in this application may also be referred to as user equipment (user equipment, UE). The terminal device may be deployed on land, including indoors or outdoors, or in a hand-held manner or a vehicle-mounted manner. The terminal device can also be deployed on the water (for example, on a ship). The terminal device can also be deployed in the air (for example, on an airplane, a balloon, or a satellite). The terminal device may be a mobile phone (mobile phone), a tablet (pad), a computer with a wireless transceiver function, a virtual reality (virtual reality, VR) device, an augmented reality (augmented reality, AR) device, a wireless device in industrial control (industrial control), a wireless device in self driving (self driving), a wireless device in remote medical (remote medical), a wireless device in a smart grid (smart grid), a wireless device in transportation safety (transportation safety), a wireless device in a smart city (smart city), a wireless device in a smart home (smart home), or the like.

To enable the terminal device to obtain an IP address of another terminal device in a group, in the embodiments of this application, the application function network element may send, to the capability exposure network element, an event registration request (corresponding to the first event registration request in the embodiments of this application) used to request an IP address of the terminal device in the group. After obtaining an IP address of a first terminal device in the group from the core network element, the capability exposure network element sends, to the application function network element, a first event notification message that carries the IP address of the first terminal device. Then, the application function network element may send, to the another terminal device that is in the group and to which the IP address has been allocated, a first message that carries the IP address of the first terminal device, so that the another terminal device may learn of the IP address of the first terminal device. In this way, when the another terminal device needs to send an IP packet to the first terminal device, when constructing the IP packet, the another terminal device may set a destination end address of an IP packet to the IP address of the first terminal device, so that a gateway (for example, the UPF network element) may forward the packet to the first terminal device based on the destination end address.

Based on the network architecture shown in FIG. 1 and with reference to the accompanying drawings, the following describes a method for obtaining an internet protocol IP address of a terminal device provided in an embodiment of this application. As shown in FIG. 2, the method includes the following steps.

Step 201: An application function network element sends a first event registration request to a capability exposure network element, where the first event registration request is used to request to obtain an IP address of a terminal device in a group, and the first event registration request may carry a group identifier of the group, for example, a group identifier of the group at an application layer, to indicate that the application function network element needs to obtain the IP address of the terminal device in the group indicated by the group identifier.

The application function network element may be a group server. Before the application function network element sends the first event registration request to the capability exposure network element, the application function network element may create the group, for example, may determine the group identifier of the group and determine group members of the group.

Alternatively, the application function network element may be a function entity serving another group server. Before sending the first event registration request to the capability exposure network element, the application function network element may receive a sent service request from the group server. The service request may include the group identifier of the group. Optionally, the service request may further include a group member list of the group.

Step 202: After the capability exposure network element receives the first event registration request from the application function network element, the capability exposure network element obtains an IP address of a first terminal device from a core network element. The core network element may be a session management network element or a unified data management network element. This is not limited in this embodiment of this application. The first terminal device belongs to the group.

Step 203: The capability exposure network element sends a first event notification message to the application function network element, where the first event notification message includes the IP address of the first terminal device.

Step 204: After the application function network element receives the first event notification message from the capability exposure network element, the application function network element may send a first message to another terminal device that is in the group and to which an IP address has been allocated. The first message includes the IP address of the first terminal device, an identifier of the first terminal device, and the group identifier of the group. The another terminal device is any terminal device other than the first terminal device in the group.

An information type of the first event registration request is not limited in this embodiment of this application. Any message that may be used to request to obtain the IP address of the terminal device in the group is applicable to this embodiment of this application. For example, the application function network element may set an event number corresponding to the group, and include the event number in the first event registration request, to indicate that the first event registration request is a request message corresponding to the group. The first event registration request may further indicate a registration event type. In this embodiment of this application, the registration event type is obtaining the IP address of the terminal device in the group.

The first event registration request may further carry identifiers, for example, application layer identifiers, of one or more terminal devices in the group. In this embodiment of this application, a quantity of the identifiers that are of the terminal devices and that are carried in the first event registration request is not limited. The first event registration request may carry identifiers of all terminal devices joining the group. For example, carry only the identifier of the first terminal device. In this case, the first event registration request is used to request the IP address of the first terminal device.

The first event registration request may further carry first indication information, and the first indication information may be used to indicate a response manner of the capability exposure network element to the event.

For example, there may be two manners:
Manner 1: The first indication information indicates the capability exposure network element to return IP addresses of all the terminal devices in the group to the application function network element at a time.

This response manner is a one-time response. The capability exposure network element needs to obtain the IP addresses of all the terminal devices in the group, and then sends, to the application function network element, the first event notification message that carries the IP addresses of all the terminal devices in the group.

Manner 2: The first indication information indicates the capability exposure network element to return, when obtaining an IP address of any terminal device in the group, the obtained IP address of the terminal device, or may indicate the capability exposure network element to return, when obtaining IP addresses of any quantity of terminal devices in the group, the obtained IP addresses of the terminal devices.

This response manner is a one-by-one response. Provided that the capability exposure network element obtains an IP address of a terminal device in the group, the capability exposure network element may send, to the application function network element, the first event notification message that carries the IP address of the terminal device. In other words, the first event notification message needs to be sent for a plurality of times, and the IP address carried in the first event notification message sent each time belongs to a different terminal device in the group.

It should be understood that, if the first event registration request carries identifiers of some terminal devices, correspondingly, the first indication information may indicate the capability exposure network element to return IP addresses of the some terminal devices in the group to the application function network element at a time (one-time response), or may indicate the capability exposure network element to return, after obtaining an IP address of any terminal device in the some terminal devices, the obtained IP address of the terminal device to the application function network element (one-by-one response). If the first event registration request carries an identifier of only one terminal device, the two response manners are the same.

An application layer identifier of a terminal device is an identifier of the terminal device at an application layer. For example, the application layer identifier of the terminal device may be a global public subscriber identifier (global public subscriber identifier, GPSI), a mobile phone number (e.g. mobile station international ISDN number, MSISND), and a user identity (user identity) of the terminal device. An ISDN (integrated services digital network) is an integrated service digital network. A group identifier of a group at an application layer is an identifier of a user group defined at an application layer, for example, an external group identifier (External Group ID).

The terminal device may belong to a plurality of different groups. For example, the terminal device may belong to groups A, B, and C. IP addresses allocated by a network side device (for example, the session management network element) to the terminal device for different group sessions (for example, sessions of the groups A, B, and C) may be different. That the first event registration request carries the group identifier of the group may indicate that the IP address requested by the first event registration request is the IP address allocated to the terminal device in the group indicated by the group identifier of the group. Correspondingly, after receiving the first event registration request, the capability exposure network element feeds back, to the application function network element, the first event notification message that carries the IP address allocated to the terminal device in the group indicated by the group identifier of the group (for example, the group identifier of the group at the application layer).

After receiving the first event registration request, the capability exposure network element obtains, from the core network element, the IP address of the terminal device in the group in the following manner:

The capability exposure network element first sends a second event registration request to the core network element. The second event registration request is used to request to obtain the IP address of the terminal device in the group. The second event registration request may indicate a registration event type. In this embodiment of this application, the registration event type is obtaining the IP address of the terminal device in the group.

The core network element can learn of only a group identifier of the group at a network layer and a network layer identifier of the terminal device. In this case, to enable the core network element to determine a group to which a terminal device with an IP address requested by the capability exposure network element belongs, or determine terminal devices to which an IP address requested by the capability exposure network element belongs, and a group to which the terminal devices belong, before sending the second event registration request, the capability exposure network element may perform some information conversion operations based on a correspondence between the group identifier of the group at the application layer and the group identifier of the group at the network layer and a correspondence between the application layer identifier and the network layer identifier of the terminal device. The capability exposure network element may convert the group identifier of the group at the application layer into the group identifier of the group at the network layer, and include the group identifier of the group at the network layer in the second event registration request. The group identifier of the group at the network layer is an identifier that is of a terminal device group and that is defined in a 3GPP Standard specification, for example, a 5G local area network group identifier (5GLAN Group ID), an internal group identifier (internal group ID), a data network name (data network name, DNN), or a combination of the DNN and a single network slice selection assistance information (single network slice selection assistance information, S-NSSAI).

If the first event registration request carries the application layer identifier of the terminal device in the group, the capability exposure network element may further convert the application layer identifier of the terminal device into the network layer identifier of the terminal device, and include the network layer identifier of the terminal device in the second event registration request. The network layer identifier of the terminal device is an identifier that is of the terminal device and that is defined in the 3GPP Standard specification, for example, an international mobile subscriber identification number (international mobile subscriber identification number, IMSI), a subscription permanent identifier (subscription permanent identifier, SUPI), and a globally unique temporary UE identity (globally unique temporary UE identity, GUTI).

The correspondence between the group identifier of the group at the application layer and the group identifier of the group at the network layer and the correspondence between the application layer identifier and the network layer identifier of the terminal device may be locally stored by the capability exposure network element, or may be obtained by the capability exposure network element from the unified data management network element.

It should be noted that if the first event registration request does not carry the identifier of the terminal device in the group, the capability exposure network element may query the terminal device in the group based on the group identifier of the group, and determine the identifier of the terminal device in the group. For example, the capability exposure network element may locally store a correspondence between the group identifier of the group at the application layer and the application layer identifier of the terminal device in the group, and the correspondence between the application layer identifier and the network layer identifier of the terminal device. The capability exposure network element may determine the network layer identifier of the terminal device in the group based on the locally stored information, and include the network layer identifier of the terminal device in the group in the second event registration request. In another possible implementation, the capability exposure network element may obtain the identifier, for example, the network layer identifier, of the terminal device in the group from the unified data management network element. For example, the capability exposure network element may send, to the unified data management network element, a query message used to query the network layer identifier of the terminal device in the group. The query message carries the group identifier of the group at the application layer or the group identifier of the group at the network layer. The unified data management network element queries, from stored information, the network layer identifier of the terminal device in the group based on the group identifier of the group at the application layer or the group identifier of the group at the network layer, includes the found network layer identifier of the terminal device in the group in a query response, and sends the query response to the capability exposure network element. The manner in which the capability exposure network element obtains the network layer identifier of the terminal device is merely an example. No limitation is imposed in this embodiment of this application.

If the first event registration request does not carry the identifier of the terminal device in the group, the capability exposure network element may not query the terminal device in the group, but only includes the group identifier of the group in the second event registration request. In this way, the core network element may be indicated to feed back the IP addresses of all the terminal devices in the group indicated by the group identifier of the group.

The second event registration request may further carry second indication information, and the second indication information may be used to indicate a response manner of the core network element to the event.

For example, there may be two manners:
Manner 1: The second indication information indicates the core network element to return the IP addresses of all the terminal devices in the group to the capability exposure network element at a time.

This response manner is a one-time response. Only after obtaining the IP addresses of all the terminal devices in the group, the core network element sends, to the capability exposure network element, a second event notification message that carries the IP addresses of all the terminal devices in the group. In this case, if the second event registration request carries the network layer identifier of the terminal device in the group, after obtaining IP addresses of all terminal devices indicated by network layer identifiers in the group, the core network element may feed back, to the capability exposure network element, the second event notification message that carries the IP addresses of all the terminal devices in the group. If the second event registration request does not carry the identifier of the terminal device in the group, the core network element may query the identifiers, for example, the network layer identifiers, of all the terminal devices in the group from the unified data management network element by using the group identifier of the group at the network layer, to determine the terminal devices in the group. After obtaining the IP addresses of all the terminal devices in the group, the core network element feeds back the second event notification message that carries the IP addresses of all the terminal devices in the group.

The manner in which the core network element obtains the identifier of the terminal device is not limited in this embodiment of this application. Any manner that can be used to obtain the network layer identifier of the terminal device in the group is applicable to this embodiment of this application.

Manner 2: The second indication information indicates the core network element to return, when obtaining IP addresses of any one or more terminal devices in the group, the obtained IP addresses of the terminal devices.

This response manner is a one-by-one response. Provided that the core network element obtains the IP addresses of the one or more terminal devices in the group, the core network element may send, to the capability exposure network element, a second event notification message that carries the IP addresses of the terminal devices. That is, the second event notification message needs to be sent for a plurality of times. In this case, if the second event registration request carries the identifier of the terminal device in the group, after obtaining an IP address of any terminal device that is in the group and that is indicated by an identifier, the core network element may feed back, to the capability exposure network element, the second event notification message that carries the IP address of the terminal device. If the second event registration request does not carry the identifier of the terminal device in the group, the core network element may query the identifiers, for example, the network layer identifiers, of all the terminal devices in the group from the unified data management network element by using the group identifier of the group, to determine the terminal devices in the group. After obtaining the IP address of any terminal device in the group, the core network element feeds back the second event notification message that carries the IP address of the terminal device.

After receiving the second event registration request, the core network element first determines the IP address of the terminal device in the group, and then sends the second event notification message to the capability exposure network element.

There are a plurality of manners for the core network element to determine the IP address of the terminal device in the group. An example in which the first terminal device is any terminal device in the group is used to describe different manners for the core network element to determine the IP address of the first terminal device. Two of the manners are listed below.

1. The core network element is a session management network element.

The session management network element has a function of allocating the IP address to the terminal device. After receiving a session establishment request from the first terminal device, the session management network element may allocate the IP address to the first terminal device. The session management network element may allocate the IP address to the first terminal device by using a user plane network element, or may request, by using a user plane network element, a dynamic host configuration protocol (dynamic host configuration protocol, DHCP) server to allocate the IP address to the first terminal device, and obtain the IP address of the first terminal device from the DHCP server.

It should be noted that, because the first terminal device establishes different sessions, the session management network element allocates different IP addresses to the different sessions, to ensure session independence of the first terminal device. In this embodiment of this application, the session establishment request is a session establishment request used to request to access a group session of a group. The group session is a session between the first terminal device and another terminal device in the group. In other words, the IP address allocated to the first terminal device is an IP address used by the first terminal device to perform data transmission with the another terminal device in the group.

The session establishment request from the first terminal device may further carry the identifier (for example, a network layer identifier) of the first terminal device and the group identifier of the group to which the first terminal device belongs (for example, the group identifier of the group at the network layer). The session management network element may obtain the identifier of the first terminal device and the group identifier of the group from the session establishment request.

After the session management network element allocates the IP address to the first terminal device or allocates the IP address to the first terminal device by using the DHCP server, if the second event registration request includes the group identifier of the group, the session management network element may determine that the group identifier that is of the group and that is carried in the second event registration request is consistent with a group identifier that is of the group and that is carried in the session establishment request. The session management network element sends, to the capability exposure network element, the second event notification message that carries the IP address of the first terminal device. If the second event registration request further includes the identifier of the first terminal device, the session management network element determines that an identifier that is of the first terminal device and that is carried in the session establishment request is consistent with the identifier that is of the first terminal device and that is carried in the second event registration request, and the group identifier that is of the group and that is carried in the second event registration request is consistent with the group identifier that is of the group and that is carried in the session establishment request. The session management network element sends, to the capability exposure network element, the second event notification message that carries the IP address of the first terminal device.

2. The core network element is a unified data management network element.

The unified data management network element determines the IP address of the first terminal device based on subscription information of the first terminal device. Specifically, when the first terminal device initiates a session establishment request, the session management network element receives the session establishment request, allocates the IP address to the first terminal device, and may update the subscription information of the first terminal device and include the IP address of the first terminal device in the subscription information of the first terminal device. For example, the session management network element may send a subscription information update notification to the unified data management network element. The subscription information update notification carries the IP address of the first terminal device, and may further carry the group identifier of the group (for example, the group identifier of the group at the network layer). After receiving the subscription information update notification, the unified data management network element may update the subscription information of the first terminal device.

The unified data management network element receives the second event registration request. If the second event registration request includes the group identifier of the group, the unified data management network element may determine that the group identifier that is of the group and that is carried in the second event registration request is consistent with the group identifier that is of the group and that is in the subscription information of the first terminal device. The unified data management network element sends, to the capability exposure network element, the second event notification message that carries the IP address of the first terminal device. If the second event registration request further includes the identifier of the first terminal device, the unified data management network element determines whether an identifier that is of the first terminal device and that is in the subscription information of the first terminal device is consistent with the identifier carried in the second event registration request, and whether the group identifier that is of the group and that is carried in the second event registration request is consistent with the group identifier that is of the group and that is in the subscription information of the first terminal device. The unified data management network element sends, to the capability exposure network element, the second event notification message that carries the IP address of the first terminal device, when the identifiers are both consistent.

The foregoing description is provided by using only an example in which the core network element sends the second event notification message to the capability exposure network element after obtaining an IP address of a terminal device (the first terminal device) (which corresponds to that the second indication information indicates the one-by-one response). The core network element may alternatively send the second event notification message to the capability exposure network element after obtaining IP addresses of all terminal devices in a group (which corresponds to that the second indication information indicates the one-time response).

The second event notification message may further include third indication information, and the third indication message indicates that the IP addresses of all the terminal devices in the group have been notified. Corresponding to the one-by-one response manner, after obtaining an IP address of a last terminal device in the group, the core network element may include the third indication message to the second event notification message sent to the capability exposure network element. Corresponding to the one-time response manner, the core network element may also include the third indication message in the second event notification message sent to the capability exposure network element.

It should be noted that the second event notification message may carry only the IP address of the first terminal device and the identifier, for example, the network layer identifier, of the first terminal device, and the capability exposure network element may indirectly determine, based on a correspondence between an event registration request and an event notification message, that the IP address carried in the second event notification message is the IP address of the first terminal device in the group. When the application function network element requests only the IP address of the first terminal device, the second event notification message may not carry the identifier of the first terminal device.

For example, in an implementation of the correspondence between the event registration request and the event notification message, an event registration request message carries an event number or a sequence number, and as a response to the event registration request, the event notification message carries the same event number or sequence number. When receiving the second event notification message, the capability exposure network element may determine, based on the event number or the sequence number, that the second event notification message is a response to the previous second event registration request. The capability exposure network element may determine, based on this, that the IP address carried in the second event notification message is the IP address of the first terminal device in the group.

In another possible implementation, the second event notification message may carry the group identifier of the group, for example, the group identifier of the group at the network layer, or may further carry the identifier, for example, the network layer identifier, of the first terminal device. After receiving the second event notification message, the capability exposure network element may obtain the IP address of the first terminal device from the second event notification message.

If the first indication information indicates the one-by-one response manner, the second indication information also indicates the one-by-one response manner. After the capability exposure network element receives the second event notification message, where the second event notification message carries the network layer identifier of the first terminal device, the capability exposure network element may convert the network layer identifier of the first terminal device into the application layer identifier of the first terminal device, and include the application layer identifier of the first terminal device in the first event notification message. If the second event notification message further carries the group identifier of the group at the network layer, the capability exposure network element may convert the group identifier of the group at the network layer into the group identifier of the group at the application layer, and include the group identifier of the group at the application layer in the first event notification message. The first event notification message carries the application layer identifier of the first terminal device or the group identifier of the group at the application layer, so that the application function network element can more clearly determine that the IP address in the first event notification message is the IP address of the first terminal device in the group.

If the first indication information indicates the one-time response manner, and the second indication information indicates the one-by-one response manner, after receiving the second event notification message, the capability exposure network element may first store the application layer identifier and the IP address of the terminal device, and then return the first event notification message to the application function network element until the capability exposure network element determines that the IP addresses of all the terminal devices in the group are received.

Alternatively, the capability exposure network element may determine, based on the third indication information, that the IP addresses of all the terminal devices in the group are received. Alternatively, the capability exposure network element may query locally stored IP addresses of terminal devices in the group, to determine whether there is a terminal device that is in the group and that has no IP address. If not, the first event notification message may be returned to the application function network element.

If the first indication information indicates the one-time response manner, and the second indication information also indicates the one-time response manner, after receiving the second event notification message, the capability exposure network element may directly return the first event notification message to the application function network element.

If the first indication information indicates the one-by-one response manner, and the second indication information indicates the one-time response manner, after receiving the second event notification message, the capability exposure network element may return, to the application function network element one by one, the first event notification message that carries an IP address of a different terminal device in the group.

It should be noted that the first event notification message may carry only the IP address and the identifier, for example, the application layer identifier, of the terminal device (for example, the first terminal device), and the application function network element may indirectly determine, based on the correspondence between the event registration request and the event notification message, that the IP address carried in the first event notification message is the IP address of the first terminal device. For example, the application function network element may determine, based on the event number or the sequence number, that the first event notification message is a response to the previous first event registration request. When the application function network element requests only the IP address of the first terminal device, the first event notification message may not carry the identifier of the first terminal device.

After obtaining the IP address of the first terminal device, the application function network element may store the IP address of the first terminal device, and may further notify the another terminal device in the group, for example, a second terminal device that is in the group and to which an IP address has been allocated, of the IP address of the first terminal device.

In a possible implementation, after receiving the IP address of the first terminal device, the application function network element queries whether the IP address of the first terminal device in the group has been locally stored. If the IP address has been stored, the application function network element may check whether an IP address record of another group member is locally stored. If not, the process ends. If yes, the application function network element separately sends the IP address of the first terminal device to the another group member, or may send the IP address of the another group member to the first terminal device.

The application function network element may locally store the IP address of the terminal device, the group identifier of the group to which the terminal device belongs, and the identifier of the terminal device. After obtaining the IP address of the first terminal device, the application function network element may query a locally stored terminal device to which an IP address has been allocated, and determine that the terminal device and the first terminal device belong to a same group.

After finding the another terminal device, the application function network element may send the first message to the another terminal device. A quantity of other terminal devices is not limited in this embodiment of this application, and may be greater than or equal to one. If there are a plurality of other terminal devices, the application function network element may send the first message to the plurality of other terminal devices in a multicast manner, or may send the first message in a unicast manner.

The application function network element may send, to the another terminal device by using a user plane network element, the first message that carries the IP address of the first terminal device. The first message may be an application layer message, and the first message may further carry the group identifier of the group (for example, the group identifier of the group at the application layer and the group identifier of the group at the network layer). Optionally, the first message may further include the identifier of the first terminal device, for example, the application layer identifier or the network layer identifier of the first terminal device.

After receiving the first message, the another terminal device may determine that the group identifier that is of the group and that is carried in the first message is consistent with a group identifier of a group to which the another terminal device belongs. That is, the another terminal device determines that the another terminal device and the first terminal device belong to a same group. The another terminal device determines, based on the identifier of the first terminal device, that the IP address carried in the first message is the IP address of the first terminal device. The another terminal device may store the IP address of the first terminal device, the identifier of the first terminal device, or the group identifier of the group that are carried in the first message.

For example, the application function network element may construct an IP packet. The IP packet includes an application layer message, and the application layer message carries the IP address of the first terminal device and the identifier of the first terminal device. The application function network element sends the IP packet to the another terminal device by using a packet data unit (packet data unit, PDU) session of the another terminal device. After receiving the IP packet, the another terminal device may obtain the IP address of the first terminal device from the application layer message.

For the another terminal device that has learned of the IP address of the first terminal device, if there is information to be sent to the first terminal device, when constructing an IP packet, the another terminal device may set a destination end address of the IP packet to the IP address of the first terminal device, and send the IP packet to the user plane network element corresponding to the first terminal device. The user plane network element may directly send the IP packet to the first terminal device based on the destination end address of the IP packet.

Because the first terminal device and the second terminal device may belong to one or more different groups, the application function network element may send, to the second terminal device, IP addresses allocated to the first terminal device in different groups (for example, a first group and a second group).

For example, the second terminal device may receive the first message from the application function network element. The first message includes a first IP address of the first terminal device, the identifier of the first terminal device, and a group identifier of the first group to which the first terminal device belongs.

The second terminal device may store a correspondence among the identifier of the first terminal device, the group identifier of the first group to which the first terminal device belongs, and the first IP address of the first terminal device.

The second terminal device may further receive a third message from the application function network element, where the third message includes a second IP address of the first terminal device, the identifier of the first terminal device, and a group identifier of the second group to which the first terminal device belongs.

A correspondence between the identifier of the first terminal device, the group identifier of the second group to which the first terminal device belongs, and the second IP address of the first terminal device is stored.

If the second terminal device needs to interact with the first terminal device by using a group session of the first group, that is, needs to send data to the first terminal device in the first group, the second terminal device may set a destination end address of an IP packet to the first IP address of the first terminal device, and send the IP packet to the first terminal device by using the user plane network element.

If the second terminal device needs to interact with the first terminal device by using a group session of the second group, that is, needs to send data to the first terminal device in the second group, the second terminal device may set a destination end address of an IP packet to the second IP address of the first terminal device, and send the IP packet to the first terminal device by using the user plane network element.

In different group sessions, the second terminal device may interact with the first terminal device by setting a destination end address of an IP packet to a corresponding IP address of the first terminal device. The group identifiers and the identifiers of the first terminal device in the first message and the third message may clearly indicate a terminal device to which the IP address carried in the indication message belongs, and a group to which the terminal device belongs, so that IP addresses of terminal devices in different groups can be effectively distinguished.

Certainly, the application function network element may alternatively send the IP address of the another terminal device to the first terminal device. For example, the application function network element may send, to the first terminal device, a second message that carries the IP address of the another terminal device. The second message includes the IP address of another terminal device, an identifier of the another terminal device, and the group identifier of the group. A manner in which the application function network element sends the IP address of the another terminal device to the first terminal device is similar to a manner in which the application function network element sends the IP address of the first terminal device to the another terminal device. For details, refer to the foregoing content. Details are not described herein again.

In a possible implementation, if the application function network element obtains the IP addresses of all the terminal devices in the group at a time, the application function network element may store the IP addresses of all the terminal devices in the group, and may further notify all the terminal devices in the group of the IP addresses of all the terminal devices in the group. The application function network element may send, to all the terminal devices in the group in a multicast manner, a message that carries the IP addresses of all the terminal devices in the group, or may send, to each terminal device in the group in a unicast manner, a message that carries the IP addresses of all the terminal devices in the group.

For example, the application function network element sends, to the another terminal device in the group, a message that carries the IP addresses of all the terminal devices in the group. The application function network element may send, to the another terminal device, a message that carries IP addresses of terminal devices other than the another terminal device in the group.

The network architecture shown in FIG. 1 is used as an example. The first terminal device is the UE A, and the another terminal device is the UE B. When constructing an IP packet, the UE B sets a destination end address of the IP packet to an IP address of the UE A, and sends the IP packet to the UPF # 1. The UPF #1 may perform local conversion on the IP packet based on the destination end address of the IP packet, and directly send the IP packet to the UE A.

The embodiment shown in FIG. 2 is applied to a specific scenario. The method for obtaining an IP address of a terminal device provided in the embodiments of this application is further described by using an example in which the application function network element is the AF network element, the capability exposure function network element is the NEF network element, and the core network elements are the SMF network element and the UDM network element.

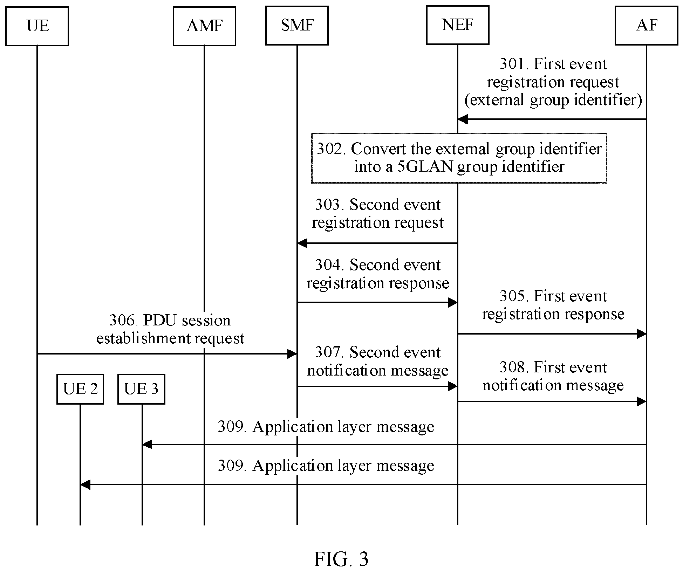

In the embodiments shown in FIG. 3 to FIG. 6, a UE ID may be a network layer identifier of UE.

Case 1: The core network element is the SMF network element.

FIG. 3 shows a method for obtaining an IP address of a terminal device according to an embodiment of this application. In the method embodiment, an AF network element requires a network side (for example, an NEF network element) to return IP addresses of all UEs in a group. The method includes the following steps.

Step 301: The AF network element sends a first event registration request to the NEF network element. The first event registration request carries an external group ID, and the first event registration request is used to request to obtain, from the NEF network element, IP addresses of all UEs in a group indicated by the external group ID.

Optionally, the first event registration request may further carry a GPSI of each UE in the group, to indicate that the AF network element needs to obtain an IP address of UE indicated by each GPSI.

Optionally, the first event registration request may further include first indication information, and the first indication information is used to indicate a response manner of the NEF network element to the event.

Specifically, the response manner may have two types: a one-time response and a one-by-one response.

In the embodiment shown in FIG. 3, the first indication information is used to indicate the NEF network element to return the IP addresses of all the UEs in the group at a time.

Step 302: After receiving the first event registration request, the NEF network element converts the external group ID into a 5GLAN group identifier (for example, a 5GLAN DNN).

If the first event registration request carries the GPSI of each UE in the group, the NEF network element may further convert the GPSI of each UE into a UE ID.

The NEF network element may implement conversion between the external group ID and the 5GLAN group identifier and conversion between the GPSI and the UE ID based on a correspondence between the GPSI and the UE ID and a correspondence between the external group ID and the 5GLAN group identifier.

The correspondence between the GPSI and the UE ID and the correspondence between the external group ID and the 5GLAN group identifier may be locally stored by the NEF network element, may be requested by the NEF network element from a UDM network element, or may be preconfigured by the UDM network element for the NEF network element.

If the first event registration request carries a GPSI of any UE in the group, the NEF network element may obtain GPSIs of UEs in the group (that is, a group member identifier list in the group) based on the received external group ID. For example, the group member identifier list is obtained from the UDM network element. The UDM network element may prestore group information. The group information includes but is not limited to the group identifier and the group member list.

Step 303: The NEF network element sends a second event registration request to an SMF network element. The second event registration request includes the 5GLAN group identifier, and the second event registration request is used to request to obtain, from the SMF network element, the IP addresses of all the UEs in the group indicated by the 5GLAN group identifier.

Optionally, the second event registration request may further carry a UE ID of each UE in the group, to indicate that the SMF network element needs to obtain an IP address of the UE indicated by each UE ID.

Optionally, the second event registration request may further include second indication information, and the second indication information is used to indicate a response manner of the SMF network element to the event. The response manner is similar to the response manner in step 301. The second indication information is specific to the SMF network element, and the first indication information is specific to the NEF network element. Details are not described herein again.

Step 304: After the SMF network element receives the second event registration request, the SMF may send a second event registration response to the NEF network element, to indicate that event registration succeeds.

If the second event registration request does not carry a UE ID of each UE in the group, the SMF network element may obtain the UE ID of each UE in the group based on the 5GLAN group identifier.

For example, the SMF network element may determine the UE ID of each UE in the group based on a correspondence between the 5GLAN group identifier and the UE in the group in a manner similar to that used by the NEF network element to obtain the group member list. The correspondence between the 5GLAN group identifier and the UE in the group may be locally stored on the SMF network element, or may be obtained by the SMF network element from the UDM network element. The correspondence between the group identifier and the UE in the group may be in a form of a list. The list includes the 5GLAN group identifier and a member list of all the UEs in the group, and the member list includes the UE IDs of the UEs.

Step 305: After receiving the second event registration response, the NEF network element sends a first event registration response to the AF network element, to indicate that the event registration succeeds.

Step 306: The UE sends a packet data unit (packet data unit, PDU) session establishment request to the SMF network element. The PDU session establishment request may carry the 5GLAN group identifier, and is used to establish a group session of a 5GLAN group to which the UE belongs.

Step 307: The SMF network element obtains the 5GLAN group identifier in the PDU session establishment request, and determines whether the 5GLAN group identifier is consistent with the 5GLAN group identifier obtained from the NEF (the 5GLAN group identifier in the second event registration request). If yes, the SMF network element sends a second event notification message to the NEF network element after allocating the IP address to the UE by using a UPF network element.

Optionally, the SMF network element may obtain the UE ID from the PDU session establishment request, and determine whether the UE ID is consistent with the UE ID obtained from the NEF network element (or obtained from the UDM network element, or determined based on the locally stored information). When the 5GLAN group identifiers are the same and the UE IDs are the same, the second event notification message is returned to the NEF network element.

If the second event registration request includes the second indication information, and the second indication information indicates the SMF network element to return, when obtaining an IP address of any UE in the group, the obtained IP address of the UE, the SMF network element sends the second event notification message to the NEF network element after allocating the IP address to the UE. The second event notification message includes the UE ID and the corresponding IP address of the UE.

If the second event registration request includes the second indication information, and the second indication information indicates SMF network element to return the IP addresses of all the UEs in the group to the NEF network element at a time, the SMF network element first stores the UE ID and the corresponding IP address of the UE after allocating the IP address to the UE. After all the UEs in the group each initiate a PDU session establishment procedure, and the SMF network element allocates the IP addresses to all the UEs in the group, the SMF network element returns the second event notification message to the NEF network element. The second event notification message includes the UE IDs and the corresponding IP addresses of all the UEs in the group, and optionally, may further include the 5GLAN group identifier. The UE IDs and the corresponding IP addresses of all the UEs in the group may be in a form of a list.

Optionally, the second event notification message may further include third indication information, and the third indication message indicates that the IP addresses of all the UEs in the group have been notified.

Step 308: The NEF network element converts the UE IDs in the second event notification message into GPSIs, and returns a first event notification message to the AF network element. The first event notification message includes the GPSIs and the corresponding IP addresses of all the UEs in the group. The GPSIs and the corresponding IP addresses of all the UEs in the group may be in a form of a list.

In a possible implementation, a first registration request message includes the first indication information, and a response manner indicated by the first indication information is the one-time response. If a response manner indicated by the second indication message is the one-time response, after receiving the second event notification message, the NEF network element may directly return the first event notification message to the AF network element. If the response manner indicated by the second indication message is the one-by-one response, after the NEF network element receives the second event notification message, the NEF network element may first store the GPSIs and the IP addresses of the UEs, and return the first event notification message to the AF network element until the NEF network element determines that the IP addresses of all the UEs in the group are received.

The NEF network element may determine, based on the third indication information, that the IP addresses of all the UEs in the group are received, or query locally stored IP addresses of the UEs in the group, to determine whether in the group, there is UE without an IP address. If not, the first event notification message may be returned to the AF network element.

Optionally, if the second event notification message further includes the 5GLAN group identifier, the NEF network element may further convert the 5GLAN group identifier into an external group ID, and include the external group ID in the first event notification message.

Step 309: After the AF network element obtains, from the first event notification message, the IP addresses of all the UEs in the group indicated by the external group ID, the AF network element sends, by using an application layer message, a GPSI and an IP address of another UE other than the UE to the UEs in the group indicated by the external group ID.

For example, a 5GLAN group includes UE A, UE B, and UE C. The AF network element obtains GPSIs and IP addresses of the UE A, the UE B, and the UE C from the first event notification message of the NEF network element. The AF network element sends the GPSIs and the IP addresses of the UE B and the UE C to the UE A by using the application layer message, sends the GPSIs and the IP addresses of the UE A and the UE C to the UE B, and sends the GPSIs and IP addresses of the UE A and the UE B to the UE C.

When the AF network element sends, by using the application layer message, the GPSI and the IP address of the another UE other than the UE to the UEs in the group indicated by the external group ID, the application layer message may carry the external group ID, to indicate a group to which the another UE belongs.

When receiving the application layer message from the AF network element, the another UE may determine whether the another UE belongs to a group indicated by the external group ID carried in the application layer message. If yes, the GPSI and the IP address of the another UE that are carried in the application layer message may be stored.

It should be noted that if one or more UEs in a group do not go online for a long period of time, the AF network element needs to wait for a long period of time before receiving the first event notification message. To ensure that the AF network element can obtain the IP address of the UE in the group in time, after sending the first event registration request, the AF network element may enable a timer. If not receiving the first event notification message after the timer expires, the AF network element may send a first request. The first request is used to request, from the NEF network element, IP addresses that are of terminal devices in the group and that are currently obtained by the NEF network element. After receiving the first request, the NEF network element includes the currently obtained IP addresses of the terminal devices in the group in a first response, and sends the first response to the AF network element. After receiving the first response, the AF network element stores the IP addresses that are of the terminal device in the group and that are carried in the first response, and may further notify any terminal device that is in the group and to which an IP address has been allocated, of the IP address of the another UE in the group.

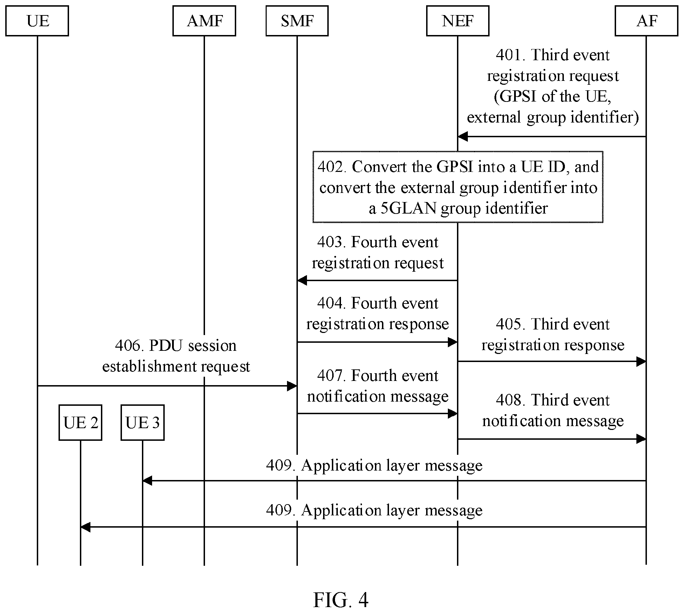

FIG. 4 shows a method for obtaining an IP address of a terminal device according to an embodiment of this application. In this method embodiment, if a new group member needs to be added to a group, an AF network element requires a network side (for example, an NEF network element) to return an IP address of UE newly added to the group. There may be one or more newly added UEs. In this method, a description is provided by using an example in which the AF network element requests to obtain an IP address of one UE newly added to the group. The method includes the following steps.

Step 401: The AF network element sends a third event registration request to the NEF network element. The third event registration request carries a GPSI of UE and an external group ID, and the third event registration request is used to request to obtain, from the NEF network element, an IP address of the UE that is indicated by the GPSI and that is in a group indicated by the external group ID.

For example, the group currently includes UE A, UE B, and UE C. The AF network element adds UE D to the group, and may include a GPSI of the UE D in the third event registration request.

Step 402: After receiving the third event registration request, the NEF network element converts the external group ID into a 5GLAN group identifier (for example, a 5GLAN DNN), and converts the GPSI into a UE ID.

Step 403: The NEF network element sends a fourth event registration request to the SMF network element. The fourth event registration request includes the UE ID and the 5GLAN group identifier, and the fourth event registration request is used to request to obtain, from an SMF network element, the IP address of the UE that is indicated by the UE ID and that is in the group indicated by the 5GLAN group identifier.

Step 404: The SMF may send a fourth event registration response to the NEF network element, to indicate that event registration succeeds.

Step 405: After receiving the fourth event registration response, the NEF network element sends a third event registration response to the AF network element, to indicate that the event registration succeeds.

Step 406: The UE sends a PDU session establishment request to the SMF network element. The PDU session establishment request may carry the 5GLAN group identifier and the UE ID, and is used to establish a group session of a 5GLAN group to which the UE belongs.

Step 407: The SMF network element obtains the UE ID and the 5GLAN group identifier in the PDU session establishment request, and determines that the UE ID and the 5GLAN group identifier in the PDU session establishment request are consistent with the UE ID and the 5GLAN group identifier that are obtained from the NEF. After allocating the IP address to the UE, the SMF network element returns a fourth event notification message to the NEF network element. The fourth event notification message includes the UE ID and the corresponding IP address, and optionally, may further include the 5GLAN group identifier.

Step 408: The NEF network element converts the UE ID into the GPSI, and returns a third event notification message to the AF network element. The third event notification message includes the GPSI and the corresponding IP address of the UE.

Optionally, if the fourth event notification message includes the 5GLAN group identifier, the NEF network element may further convert the 5GLAN group identifier into the external group ID, and include the external group ID in the third event notification message.

Step 409: After the AF network element obtains, from the third event notification message, the external group ID and the IP address of the UE indicated by the GPSI, the AF network element sends the GPSI and the IP address of the UE to another UE in the group by using an application layer message.

After receiving the IP address of the UE, the AF network element queries whether a record of the IP address of the UE in the group is locally stored. If there is no such a record, the AF network element stores the IP address of the UE. For example, the AF network element may store the 5GLAN ID, the UE ID, and the corresponding IP address. The AF network element further checks whether there is a record of an IP address of another group member in the group. If there is no such a record, the process ends. If there is a record, the IP address of the UE is sent to the another group member with the record of the IP address. Optionally, the IP address of the another group member with the record of the IP address may be further sent to the UE.

For example, the AF network element obtains the GPSI and an IP address of the UE D from the third event notification message of the NEF network element, and the AF sends the GPSI and the IP address of the UE D to the UE A, the UE B, and the UE C by using an application layer message. The AF network element may further send GPSIs and IP addresses of the UE A, the UE B, and the UE C to the UE D.

Optionally, the AF network element sends, to the UE, an application layer message that carries an IP address of another UE. Optionally, the application layer message may further include a GPSI of the another UE and an external group ID.

For example, in the embodiments shown in FIG. 3 and FIG. 4, the another UE is UE 2 and UE 3.

Case 2: The core network element is the UDM network element.

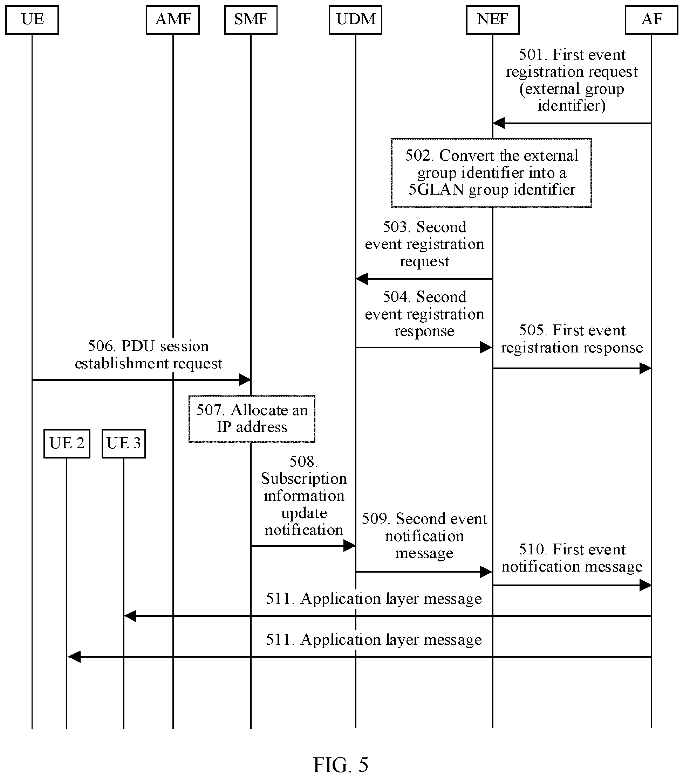

FIG. 5 shows a method for obtaining an IP address of a terminal device according to an embodiment of this application. In this method embodiment, an AF network element requires a network side (for example, an NEF network element) to return IP addresses of all UEs in a group at a time. The method includes the following steps.

Step 501: This step is the same as step 301. For details, refer to related descriptions of step 301. Details are not described herein again.

Step 502: This step is the same as step 302. For details, refer to related descriptions of step 302. Details are not described herein again.

Step 503: The NEF network element sends a second event registration request to the UDM network element. The second event registration request includes a 5GLAN group identifier, and the second event registration request is used to request to obtain, from the UDM network element, IP addresses of all UEs in a group indicated by the 5GLAN group identifier.

For descriptions of the second event registration request, refer to related descriptions in step 303. Details are not described herein again.

Step 504: After receiving the second event registration request, the UDM network element stores a UE ID and the 5GLAN group identifier, and sends a second event registration response to the NEF network element, to indicate that event registration succeeds.

If the second event registration request does not carry a UE ID of each UE in the group, the UDM network element may obtain the UE ID of each UE in the group based on the 5GLAN group identifier.

For a manner in which the UDM network element obtains the UE ID of each UE in the group, refer to the manner in which the SMF network element obtains the UE ID of each UE in the group in step 304. Details are not described herein again.

Step 505: This step is the same as step 305. For details, refer to related descriptions of step 305. Details are not described herein again.

Step 506: The UE sends a PDU session establishment request to the SMF network element. The PDU session establishment request may carry a 5GLAN group identifier, and is used to establish a group session of a 5GLAN group to which the UE belongs.

Step 507: The SMF network element establishes a PDU session for the UE, and allocates an IP address to the UE.

Step 508: The SMF network element sends a subscription information update notification to the UDM network element. The subscription information update notification carries the UE ID, the 5GLAN group identifier, and the IP address of the UE.

Step 509: The UDM network element stores the UE ID, the 5GLAN group identifier, and the IP address of the UE as contexts of the UE in subscription information of the UE. The UDM network element determines that the 5GLAN group identifier received from the SMF network element (or may be the 5GLAN group identifier in the subscription information of the UE) is consistent with the 5GLAN group identifier obtained from the NEF, and the UDM network element returns a second event notification message to the NEF network element.

Optionally, the UDM network element may further determine that the UE ID received from the SMF network element (or may be the UE ID in the subscription information of the UE) is consistent with the UE ID obtained from the NEF network element, and the UDM network element returns the second event notification message to the NEF network element.

A manner in which the UDM network element sends the second event notification message based on second indication information in the second event registration request is similar to the manner in which the SMF network element sends the second event notification message based on the second indication information in the second event registration request in step 307. For details, refer to related descriptions of step 307. Details are not described herein again.

Step 510: This step is the same as step 308. For details, refer to related descriptions of step 308. Details are not described herein again.

Step 511: This step is the same as step 309. For details, refer to related descriptions of step 309. Details are not described herein again.

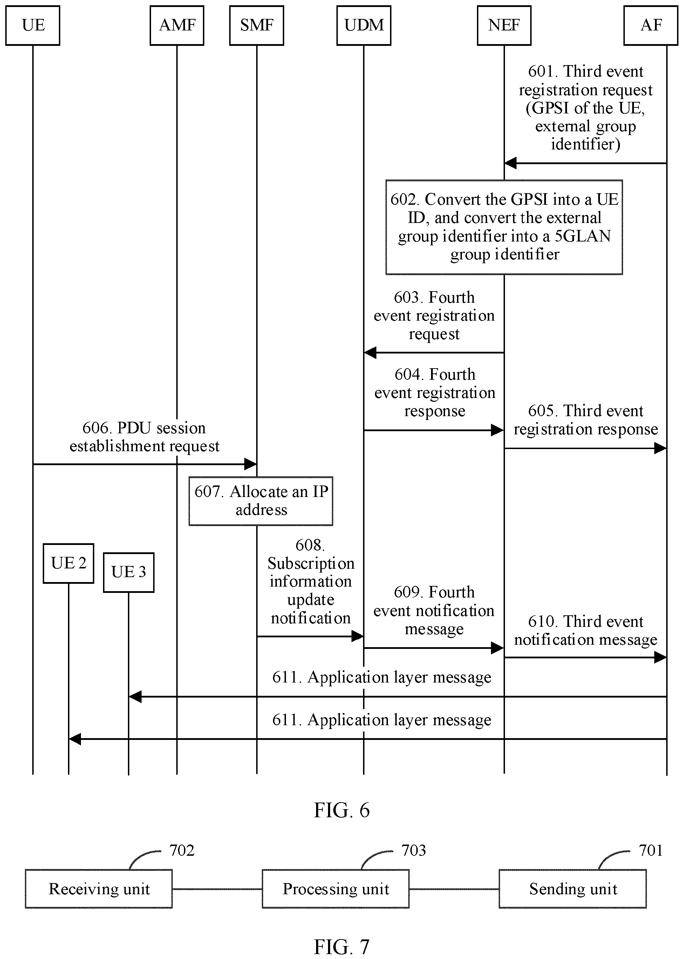

FIG. 6 shows a method for obtaining an IP address of a terminal device according to an embodiment of this application. In this method embodiment, if a new group member needs to be added to a group, an AF network element requires a network side (for example, an NEF network element) to return an IP address of UE newly added to the group. There may be one or more newly added UEs. In this method, a description is provided by using an example in which the AF network element requests to obtain an IP address of one UE newly added to the group. The method includes the following steps.

Step 601: This step is the same as step 401. For details, refer to related descriptions of step 401. Details are not described herein again.

Step 602: This step is the same as step 402. For details, refer to related descriptions of step 402. Details are not described herein again.

Step 603: The NEF network element sends a fourth event registration request to the UDM network element. The fourth event registration request includes a UE ID and a 5GLAN group identifier. The fourth event registration request is used to request to obtain, from the UDM network element, an IP address of UE that is indicated by a UE ID and that is in a group indicated by the 5GLAN group identifier.

Step 604: After receiving the fourth event registration request, the UDM network element stores the UE ID and the 5GLAN group identifier, and sends a fourth event registration response to the NEF network element, to indicate that event registration succeeds.

Step 605: This step is the same as step 405. For details, refer to related descriptions of step 405. Details are not described herein again.

Step 606: This step is the same as step 406. For details, refer to related descriptions of step 406. Details are not described herein again.

Step 607: The SMF network element establishes a PDU session for the UE, and allocates the IP address to the UE.

Step 608: The SMF network element sends a subscription information update notification to the UDM network element. The subscription information update notification carries the UE ID, the 5GLAN group identifier, and the IP address of the UE.

Step 609: The UDM network element stores the UE ID, the 5GLAN group identifier, and the IP address of the UE as contexts of the UE in subscription information of the UE. The UDM network element determines that the 5GLAN group identifier received from the SMF network element (or the 5GLAN group identifier in the subscription information of the UE) is consistent with the 5GLAN group identifier obtained from the NEF, and the UE ID received from the SMF network element (or the UE ID in the subscription information of the UE) is consistent with the UE ID obtained from the NEF network element. The UDM network element returns a fourth event notification message to the NEF network element. The fourth event notification message includes the UE ID and the corresponding IP address, and optionally, may further include the 5GLAN group identifier.

Step 610: This step is the same as step 408. For details, refer to related descriptions of step 408. Details are not described herein again.

Step 611: This step is the same as step 409. For details, refer to related descriptions of step 409. Details are not described herein again.

It should be understood that, in the embodiments shown in FIG. 4 and FIG. 6, obtaining an IP address of one UE is used as an example. It may be considered that the AF network element may alternatively request to obtain IP addresses of several UEs in a group. For an obtaining manner, refer to the embodiment shown in FIG. 4. A difference lies in that the third event registration request carries GPSIs of a plurality of UEs, and the fourth event registration request carries UE IDs of a plurality of UEs. The first indication information may indicate the NEF network element to return IP addresses of a plurality of UEs at a time, or to return an IP address of one UE. If the first indication information may indicate the NEF network element to return IP addresses of a plurality of UEs at a time, the NEF network element needs to determine that the IP addresses of the plurality of UEs are obtained before sending a third event notification message. For a second indication message, it is the similar case. In addition, a third indication message may be added, and the third indication information may indicate that the IP addresses of the plurality of UEs have been notified.

In the embodiments shown in FIG. 3 to FIG. 6, the descriptions are provided by using an example of a method for a terminal device in a group to obtain an IP address of another terminal device in the group. However, according to the foregoing embodiments, when two terminal devices (for example, UE A and UE B) both belong to a plurality of groups (for example, a first group and a second group), the UE A may obtain an IP address of the UE B in the first group and an IP address of the UE B in the second group. Similarly, the UE B may obtain an IP address of the UE A in the first group and an IP address of the UE A in the second group. When the UE A needs to interact with the UE B by using a group session of the first group or the second group, the UE A may determine, based on an identifier of the UE B and a group identifier (for example, the first group or the second group), an IP address of the UE B in a corresponding group, set a destination end address of an IP packet to the determined IP address of the UE B, and send the IP packet by using a user plane network element.

Based on a same inventive concept as the method embodiments, an embodiment of this application further provides a communication apparatus, configured to perform the method performed by the application function network element in the foregoing method embodiments. For a related feature, refer to the foregoing method embodiments. Details are not described herein again. As shown in FIG. 7, the apparatus includes a sending unit 701 and a receiving unit 702.

The sending unit 701 is configured to send a first event registration request to a capability exposure network element, where the first event registration request is used to request to obtain an internet protocol IP address of a terminal device in a group.

The receiving unit 702 is configured to receive a first event notification message from the capability exposure network element, where the first event notification message includes an IP address of a first terminal device in the group.

The sending unit 701 is further configured to send a first message to another terminal device that is in the group and to which an IP address has been allocated, where the first message includes the IP address of the first terminal device, an identifier of the first terminal device, and a group identifier of the group.

In a possible implementation, the first event registration request may include some information used to indicate the group. For example, the first event registration request may include the group identifier of the group, for example, a group identifier of the group at an application layer.

In a possible implementation, the first event registration request may further carry related information of the terminal device in the group. For example, the first event registration request may include one or more identifiers of one or more terminal devices in the group, for example, application layer identifiers, and the one or more terminal devices in the group include the first terminal device.

In a possible implementation, the first event notification message includes either or both of the following: the identifier of the first terminal device and the group identifier of the group.

In a possible implementation, the first event registration request may further carry first indication information, used to indicate a response manner of the capability exposure network element. For example, the first event registration request includes first indication information. The first indication information may indicate the capability exposure network element to return IP addresses of all terminal devices in the group at a time, or may indicate the capability exposure network element to return, when obtaining IP addresses of any one or more terminal devices in the group, the obtained IP addresses of the terminal devices.

In a possible implementation, when the first indication information indicates the capability exposure network element to return the IP addresses of all the terminal devices in the group at a time, the first event notification message includes the IP addresses of all the terminal devices in the group.

In a possible implementation, the communication apparatus further includes a processing unit 703. Before the sending unit 701 sends the first message to the another terminal device that is in the group and to which the IP address has been allocated, the processing unit 703 may determine, in locally stored terminal devices to which IP addresses have been allocated, the another terminal device that is in the group and to which the IP address has been allocated.

In a possible implementation, when sending the first message to the another terminal device in the group to which the first terminal device belongs, the sending unit 701 may send the first message to the another terminal device by using a user plane network element corresponding to the another terminal device.

In a possible implementation, the first message is an application layer message.

In a possible implementation, the sending unit 701 may further send a second message to the first terminal device, where the second message includes the IP address of the another terminal device, an identifier of the another terminal device, and the group identifier of the group.

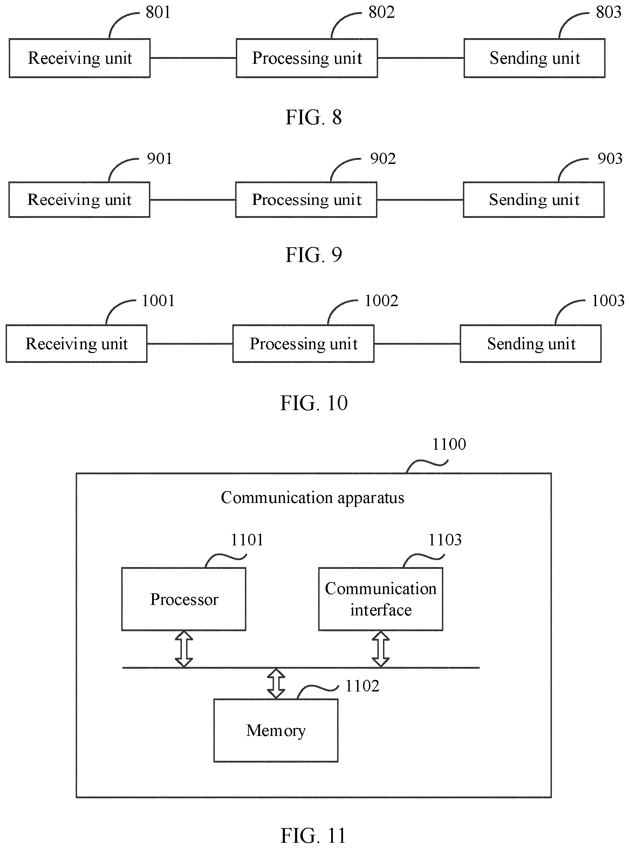

Based on a same inventive concept as the method embodiments, an embodiment of this application further provides a communication apparatus, configured to perform the method performed by the capability exposure network element in the foregoing method embodiments. For a related feature, refer to the foregoing method embodiments. Details are not described herein again. As shown in FIG. 8, the apparatus includes a receiving unit 801, a processing unit 802, and a sending unit 803.

The receiving unit 801 is configured to receive a first event registration request from an application function network element, where the first event registration request is used to request to obtain an internet protocol IP address of a terminal device in a group.

The processing unit 802 is configured to obtain an IP address of a first terminal device in the group from a core network element.

The sending unit 803 is configured to send a first event notification message to the application function network element after the processing unit 802 obtains the IP address of the first terminal device in the group from the core network element, where the first event notification message includes the IP address of the first terminal device.

In a possible implementation, the processing unit 802 triggers the sending unit 803 to send a second event registration request to the core network element, where the second event registration request is used to request to obtain the IP address of the terminal device in the group. Then, the receiving unit 801 may receive a second event notification message from the core network element, where the second event notification message includes the IP address of the first terminal device.

In a possible implementation, the first event registration request may include some information used to indicate the group. For example, the first event registration request includes a group identifier of the group, for example, a group identifier of the group at an application layer.

In a possible implementation, the first event registration request may further carry related information of the terminal device in the group. The first event registration request further includes identifiers, for example, application layer identifiers, of one or more terminal devices in the group, and the one or more terminal devices in the group include the first terminal device.

In a possible implementation, the first event notification message may include only the IP address of the first terminal device, and may further include either or both of the following: an identifier of the first terminal device (for example, an application layer identifier) and the group identifier of the group (for example, the group identifier of the group at the application layer).

In a possible implementation, the first event registration request may include first indication information, used to indicate a response manner of the capability exposure network element. For example, the first indication information indicates the capability exposure network element to return IP addresses of all terminal devices in the group at a time, or indicates the capability exposure network element to return, when obtaining IP addresses of any one or more terminal devices in the group, the obtained IP addresses of the terminal devices.

In a possible implementation, when the first indication information indicates the capability exposure network element to return the IP addresses of all the terminal devices in the group at a time, the sending unit 803 may send a first event notification message to the application function network element after the IP addresses of all the terminal devices in the group are obtained from the core network element, where the first event notification message includes the IP addresses of all the terminal devices in the group.

In a possible implementation, the processing unit 802 may further obtain an identifier of the terminal device in the group from a unified data management network element based on the group identifier.

In a possible implementation, if the first event registration request includes the group identifier of the group at the application layer, the processing unit 802 may convert the group identifier of the group at the application layer into a group identifier of the group at a network layer; and then the sending unit 803 may send the second event registration request to the core network element, where the second event registration request includes the group identifier of the group at the network layer.

In a possible implementation, if the first event registration request includes the group identifier of the group at the application layer and the application layer identifiers of the terminal devices, the processing unit 802 may further convert the application layer identifiers of the terminal devices in the group into network layer identifiers, and convert the group identifier of the group at the application layer into a group identifier of the group at the network layer, where the network layer identifiers are network layer identifiers of the terminal devices. Then, the sending unit 803 sends the second event registration request to the core network element, where the second event registration request includes the network layer identifiers of the terminal devices in the group and the group identifier of the group at the network layer.

In a possible implementation, the second event registration request includes second indication information, used to indicate a response manner of the core network element. For example, the second indication information indicates the core network element to return the IP addresses of all the terminal devices in the group at a time, or indicates the core network element to return, when obtaining the IP addresses of the any one or more terminal devices in the group, the obtained IP addresses of the terminal devices.

In a possible implementation, when the second indication information indicates the core network element to return the IP addresses of all the terminal devices in the group at a time, the second event notification message includes the IP addresses of all the terminal devices in the group.

In a possible implementation, the second event notification message includes either or both of the following: the identifier of the first terminal device (for example, the network layer identifier) and the group identifier of the group (for example, the group identifier of the group at the network layer).

In a possible implementation, the first event registration request includes the application layer identifiers of the terminal devices in the group and/or the group identifier of the group at the application layer, and the processing unit 802 may further convert the network layer identifier of the first terminal device into the application layer identifier of the first terminal device, and/or convert the group identifier of the group at the network layer into the group identifier of the group at the application layer. The sending unit 803 may send the first event notification message to the core network element, where the first event notification message includes either or both of the following: the application layer identifier of the first terminal device and the group identifier of the group at the application layer.

Based on a same inventive concept as the method embodiments, an embodiment of this application further provides a communication apparatus, configured to perform the method performed by the core network element in the foregoing method embodiments. For a related feature, refer to the foregoing method embodiments. Details are not described herein again. As shown in FIG. 9, the apparatus includes a receiving unit 901, a processing unit 902, and a sending unit 903.

The receiving unit 901 is configured to receive a second event registration request from a capability exposure network element, where the second event registration request is used to request to obtain an internet protocol IP address of a terminal device in a group.

The processing unit 902 is configured to determine an IP address of a first terminal device in the group.

The sending unit 903 is configured to send a second event notification message to the capability exposure network element after the processing unit 902 determines the IP address of the first terminal device in the group, where the second event notification message includes the IP address of the first terminal device.

In a possible implementation, the second event registration request includes a group identifier of the group, for example, a group identifier of the group at a network layer.

In a possible implementation, the second event registration request further includes an identifier, for example, a network layer identifier, of the terminal device in the group.

In a possible implementation, the second event registration request further includes second indication information, used to indicate a response manner of the core network element. For example, the second indication information indicates the core network element to return IP addresses of all terminal devices in the group at a time, or indicates the core network element to return, when obtaining IP addresses of any one or more terminal devices in the group, the obtained IP addresses of the terminal devices.

In a possible implementation, when the second indication information indicates the core network element to return the IP addresses of all the terminal devices in the group at a time, after determining the IP addresses of all the terminal devices in the group, the core network element may send a second event notification message to the capability exposure network element, where the second event notification message includes the IP addresses of all the terminal devices in the group.

In a possible implementation, after the receiving unit 901 receives a session establishment request from the first terminal device, the processing unit 902 may allocate the IP address to the first terminal device, where the session establishment request is used to request to establish a group session of the group.

In a possible implementation, the processing unit 902 may determine that a group identifier that is of the group and that is carried in the second event registration request is consistent with a group identifier that is of the group and that is carried in the session establishment request, or that the identifier that is of the terminal device in the group and that is carried in the second event registration request is consistent with an identifier that is of the first terminal device and that is carried in the session establishment request; and then the sending unit 903 may send the second event notification message to the capability exposure network element.

In a possible implementation, the processing unit 902 may determine the IP address of the first terminal device based on subscription information of the first terminal device.

In a possible implementation, the processing unit 902 determines that a group identifier that is of the group and that is carried in the second event registration request is consistent with a group identifier that is of the group and that is in the subscription information, or that the identifier that is of the terminal device in the group and that is carried in the second event registration request is consistent with an identifier that is of the first terminal device and that is in the subscription information; and then the sending unit 903 may send the second event notification message to the capability exposure network element.

In a possible implementation, the second event notification message further includes either or both of the following: the identifier of the first terminal device (for example, the network layer identifier) and the group identifier of the group (for example, the group identifier of the group at the network layer).

Based on a same inventive concept as the method embodiments, an embodiment of this application further provides a communication apparatus, configured to perform the method performed by the another terminal device in the foregoing method embodiments. For a related feature, refer to the foregoing method embodiments. Details are not described herein again. As shown in FIG. 10, the apparatus includes a receiving unit 1001 and a processing unit 1002.

The receiving unit 1001 is configured to receive a first message from an application function network element, where the first message includes a first IP address of a first terminal device, an identifier of the first terminal device, and a group identifier of a first group to which the first terminal device belongs.

The processing unit 1002 is configured to store a correspondence between the identifier of the first terminal device, the group identifier of the first group to which the first terminal device belongs, and the first IP address of the first terminal device.

In a possible implementation, the receiving unit 1001 is further configured to receive a third message from the application function network element, where the third message includes a second IP address of the first terminal device, the identifier of the first terminal device, and a group identifier of a second group to which the first terminal device belongs.

The processing unit 1002 may further store a correspondence between the identifier of the first terminal device, the group identifier of the second group to which the first terminal device belongs, and the second IP address of the first terminal device.

The apparatus further includes a sending unit 1003. The sending unit 1003 is configured to: if data needs to be sent to the first terminal device in the first group, send an IP packet to the first terminal device by using a user plane network element, where a destination end address of the IP packet is the first IP address of the first terminal device.

In a possible implementation, before the sending unit 1003 sends the IP packet to the first terminal device by using the user plane network element, the processing unit 1002 may obtain the first IP address of the first terminal device based on the identifier of the first terminal device and the group identifier of the first group to which the first terminal device belongs.

Division of the units in the embodiments of this application is an example, and is only logical function division. There may be another division manner in an actual implementation. In addition, the function units in the embodiments of this application may be integrated into one processor, or may exist alone physically, or two or more units may be integrated into one module. The foregoing integrated units may be implemented in a form of hardware, or may be implemented in a form of a software function module.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a terminal device (which may be a personal computer, a mobile phone, a network device, or the like) or a processor (processor) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

In the embodiments of this application, the application function network element, the capability exposure network element, and the core network element may each be implemented in an integrated manner or in a form of a function module obtained through division. The "module" herein may be a specific ASIC, a circuit, a processor that executes one or more software or firmware programs and a memory, an integrated logic circuit, and/or another component that can provide the foregoing functions.

In a simple embodiment, a person skilled in the art may think of that the application function network element, the capability exposure network element, and the core network element may all use the form shown in FIG. 11.

A communication apparatus 1100 shown in FIG. 11 includes at least one processor 1101 and a memory 1102, and optionally, may further include a communication interface 1103.

The memory 1102 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 1102 is any other medium that can be used to carry or store expected program code in an instruction form or a data structure form and that can be accessed by a computer, but is not limited thereto. The memory 1102 may be a combination of the foregoing memories.

In this embodiment of this application, a specific connection medium between the processor 1101 and the memory 1102 is not limited. FIG. 11 is represented by only one bold line.

The processor 1101 may have a data transceiver function, and can communicate with another device. In the apparatus shown in FIG. 11, an independent data transceiver module, for example, the communication interface 1103, may also be disposed and is configured to receive and send data. When communicating with the another device, the processor 1101 may transmit data through the communication interface 1103.

When the application function network element uses the form shown in FIG. 11, the processor 1101 in FIG. 11 may invoke computer-executable instructions stored in the memory 1102, to enable the application function network element to perform the method performed by the application function network element in any one of the foregoing method embodiments.

Specifically, functions/implementation processes of the sending unit, the receiving unit, and the processing unit in FIG. 7 may be implemented by the processor 1101 in FIG. 11 by invoking the computer-executable instructions stored in the memory 1102. Alternatively, functions/implementation processes of the processing unit in FIG. 7 may be implemented by the processor 1101 in FIG. 11 by invoking the computer-executable instructions stored in the memory 1102, and functions/implementation processes of the sending unit and the receiving unit in FIG. 7 may be implemented by the communication interface 1103 in FIG. 11.

When the capability exposure network element uses the form shown in FIG. 11, the processor 1101 in FIG. 11 may invoke computer-executable instructions stored in the memory 1102, to enable the capability exposure network element to perform the method performed by the capability exposure network element in any one of the foregoing method embodiments.

Specifically, functions/implementation processes of the sending unit, the receiving unit, and the processing unit in FIG. 8 may be implemented by the processor 1101 in FIG. 11 by invoking the computer-executable instructions stored in the memory 1102. Alternatively, functions/implementation processes of the processing unit in FIG. 8 may be implemented by the processor 1101 in FIG. 11 by invoking the computer-executable instructions stored in the memory 1102, and functions/implementation processes of the sending unit and the receiving unit in FIG. 8 may be implemented by the communication interface 1103 in FIG. 11.

When the core network element uses the form shown in FIG. 11, the processor 1101 in FIG. 11 may invoke computer-executable instructions stored in the memory 1102, to enable the core network element to perform the method performed by the core network element in any one of the foregoing method embodiments.

Specifically, functions/implementation processes of the receiving unit, the sending unit, and the processing unit in FIG. 9 may be implemented by the processor 1101 in FIG. 11 by invoking the computer-executable instructions stored in the memory 1102. Alternatively, functions/implementation processes of the processing unit in FIG. 9 may be implemented by the processor 1101 in FIG. 11 by invoking the computer-executable instructions stored in the memory 1102, and functions/implementation processes of the receiving unit and the sending unit in FIG. 9 may be implemented by the communication interface 1103 in FIG. 11.

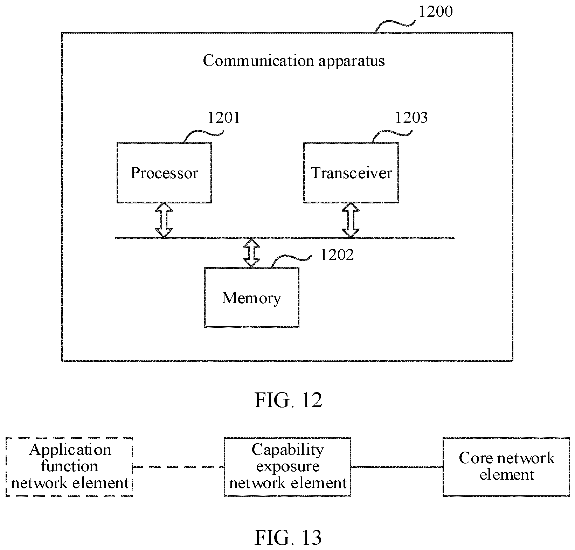

In a simple embodiment, a person skilled in the art may figure out that another terminal device may be in a form shown in FIG. 12.

A communication apparatus 1200 shown in FIG. 12 includes at least one processor 1201 and a memory 1202, and optionally, may further include a transceiver 1203.

The memory 1202 may be a volatile memory such as a random access memory. Alternatively, the memory may be a non-volatile memory such as a read-only memory, a flash memory, a hard disk drive (hard disk drive, HDD), or a solid-state drive (solid-state drive, SSD). Alternatively, the memory 1202 is any other medium that can be used to carry or store expected program code in an instruction form or a data structure form and that can be accessed by a computer, but is not limited thereto. The memory 1202 may be a combination of the foregoing memories.

In this embodiment of this application, a specific connection medium between the processor 1201 and the memory 1202 is not limited.

The processor 1201 may have a data transceiver function, and can communicate with another device. In the apparatus shown in FIG. 12, an independent data transceiver module, for example, the transceiver 1203, may also be disposed and is configured to receive and send data. When communicating with the another device, the processor 1201 may transmit data through the transceiver 1203.

When a second terminal device uses the form shown in FIG. 12, the processor 1201 in FIG. 12 may invoke computer-executable instructions stored in the memory 1202, to enable the second terminal device to perform the method performed by the second terminal device in any one of the foregoing method embodiments.

Specifically, functions/implementation processes of the receiving unit and the processing unit in FIG. 10 may be implemented by the processor 1201 in FIG. 12 by invoking the computer-executable instructions stored in the memory 1202. Alternatively, functions/implementation processes of the processing unit in FIG. 10 may be implemented by the processor 1201 in FIG. 12 by invoking the computer-executable instructions stored in the memory 1202, and functions/implementation processes of the receiving unit in FIG. 10 may be implemented by the communication interface 1203 in FIG. 12.

Based on a same inventive concept as the method embodiments, an embodiment of this application further provides a communication system, configured to perform the method in any one of the foregoing embodiments. For a related feature, refer to the foregoing method embodiments. Details are not described herein again.

For a schematic structural diagram of the communication system provided in this embodiment of this application, refer to FIG. 13. Specifically, the communication system includes a core network element and a capability exposure network element. Optionally, the communication system may further include an application function network element.

The application function network element may be configured to perform the method performed by the application function network element in the foregoing method embodiments, the capability exposure network element may be configured to perform the method performed by the capability exposure network element in the foregoing method embodiments, and the core network element may be configured to perform the method performed by the core network element in the foregoing method embodiments. For details, refer to the foregoing content. Details are not described herein again.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer usable storage media (including but not limited to a magnetic disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of the process and/or the block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded on the computer or another programmable data processing device, so that a series of operation steps are performed on the computer or the another programmable device to produce processing implemented by the computer. Therefore, the instructions executed on the computer or the another programmable device provide steps for implementing the specific function in the one or more processes in the flowcharts and/or in the one or more blocks in the block diagrams.

Obviously, a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for obtaining an internet protocol (IP) address of a terminal device, wherein the method comprises:
sending, by an application function network element, a first event registration request to a capability exposure network element, wherein the first event registration request is used to request to obtain an IP address of a terminal device in a group;
receiving, by the application function network element, a first event notification message from the capability exposure network element, wherein the first event notification message comprises an IP address of a first terminal device in the group; and
sending, by the application function network element, a first message to another terminal device that is in the group and to which an IP address has been allocated, wherein the first message comprises the IP address of the first terminal device, an identifier of the first terminal device, and a group identifier of the group.

2. The method according to claim 1, wherein the first event registration request comprises the group identifier of the group.

3. The method according to claim 2, wherein the first event registration request comprises one or more identifiers of one or more terminal devices in the group, and the one or more terminal devices in the group comprise the first terminal device.

4. The method according to any one of claims 1 to 3, wherein the first event notification message comprises either or both of the following: the identifier of the first terminal device and the group identifier of the group.

5. The method according to any one of claims 1 to 4, wherein the first event registration request further comprises first indication information, and the first indication information indicates the capability exposure network element to return IP addresses of all terminal devices in the group at a time, or indicates the capability exposure network element to return, when obtaining IP addresses of any one or more terminal devices in the group, the obtained IP addresses of the terminal devices.

6. The method according to claim 5, wherein if the first indication information indicates the capability exposure network element to return the IP addresses of all the terminal devices in the group at a time, the first event notification message comprises the IP addresses of all the terminal devices in the group.

7. The method according to any one of claims 1 to 6, wherein before the sending, by the application function network element, a first message to another terminal device that is in the group and to which an IP address has been allocated, the method further comprises:
determining, by the application function network element, the another terminal device that is in the group and to which the IP address has been allocated.

8. The method according to any one of claims 1 to 7, wherein the sending, by the application function network element, a first message to another terminal device that is in the group and to which an IP address has been allocated comprises:
sending, by the application function network element, the first message to the another terminal device by using a user plane network element corresponding to the another terminal device.

9. The method according to any one of claims 1 to 8, wherein after the receiving, by the application function network element, a first event notification message from the capability exposure network element, the method further comprises:
sending, by the application function network element, a second message to the first terminal device, wherein the second message comprises the IP address of the another terminal device, an identifier of the another terminal device, and the group identifier of the group.

10. The method according to any one of claims 1 to 7, wherein the first message is an application layer message.

11. A method for obtaining an internet protocol (IP) address of a terminal device, wherein the method comprises:
receiving, by a capability exposure network element, a first event registration request from an application function network element, wherein the first event registration request is used to request to obtain an IP address of a terminal device in a group; and
sending, by the capability exposure network element, a first event notification message to the application function network element after obtaining an IP address of a first terminal device in the group from a core network element, wherein the first event notification message comprises the IP address of the first terminal device.

12. The method according to claim 11, wherein the obtaining, by the capability exposure network element, an IP address of a first terminal device from a core network element comprises:
sending, by the capability exposure network element, a second event registration request to the core network element, wherein the second event registration request is used to request to obtain the IP address of the terminal device in the group; and
receiving, by the capability exposure network element, a second event notification message from the core network element, wherein the second event notification message comprises the IP address of the first terminal device.

13. The method according to claim 11 or 12, wherein the first event registration request comprises a group identifier of the group.

14. The method according to claim 13, wherein the first event registration request further comprises one or more identifiers of one or more terminal devices in the group, and the one or more terminal devices in the group comprise the first terminal device.

15. The method according to any one of claims 11 to 14, wherein the first event registration request comprises first indication information, and the first indication information indicates the capability exposure network element to return IP addresses of all terminal devices in the group at a time, or indicates the capability exposure network element to return, when obtaining IP addresses of any one or more terminal devices in the group, the obtained IP addresses of the terminal devices.

16. The method according to claim 15, wherein when the first indication information indicates the capability exposure network element to return the IP addresses of all the terminal devices in the group at a time, the sending, by the capability exposure network element, a first event notification message to the application function network element after obtaining an IP address of a first terminal device in the group from a core network element comprises:
sending, by the capability exposure network element, the first event notification message to the application function network element after obtaining the IP addresses of all the terminal devices in the group from the core network element, wherein the first event notification message comprises the IP addresses of all the terminal devices in the group.

17. The method according to claim 13, wherein the group identifier of the group is a group identifier of the group at an application layer, and the sending, by the capability exposure network element, a second event registration request to the core network element comprises:
converting, by the capability exposure network element, the group identifier of the group at the application layer into a group identifier of the group at a network layer; and
sending, by the capability exposure network element, the second event registration request to the core network element, wherein the second event registration request comprises the group identifier of the group at the network layer.

18. The method according to claim 13, wherein if the first event registration request does not comprise one or more identifiers of one or more terminal devices in the group, before the sending, by the capability exposure network element, a second event registration request to the core network element, the method further comprises:
obtaining, by the capability exposure network element, an identifier of the terminal device in the group from a unified data management network element based on the group identifier.

19. The method according to claim 14, wherein the group identifier of the group is a group identifier of the group at an application layer, the identifiers of the one or more terminal devices in the group are application layer identifiers, and the sending, by the capability exposure network element, a second event registration request to the core network element comprises:
converting, by the capability exposure network element, the application layer identifiers of the one or more terminal devices in the group into network layer identifiers of the terminal devices, and converting the group identifier of the group at the application layer into a group identifier of the group at a network layer; and
sending, by the capability exposure network element, the second event registration request to the core network element, wherein the second event registration request comprises the network layer identifiers of the one or more terminal devices in the group and the group identifier of the group at the network layer.

20. The method according to any one of claims 12 to 19, wherein the second event registration request comprises second indication information, and the second indication information indicates the core network element to return the IP addresses of all the terminal devices in the group at a time, or indicates the core network element to return, when obtaining the IP addresses of the any one or more terminal devices in the group, the obtained IP addresses of the terminal devices.

21. The method according to claim 20, wherein when the second indication information indicates the core network element to return the IP addresses of all the terminal devices in the group at a time, the second event notification message comprises the IP addresses of all the terminal devices in the group.

22. The method according to any one of claims 11 to 21, wherein the first event notification message comprises either or both of the following: an identifier of the first terminal device and the group identifier of the group.

23. A method for obtaining an internet protocol (IP) address of a terminal device, wherein the method comprises:
receiving, by a core network element, a second event registration request from a capability exposure network element, wherein the second event registration request is used to request to obtain an IP address of a terminal device in a group; and
sending, by the core network element, a second event notification message to the capability exposure network element after determining an IP address of a first terminal device in the group, wherein the second event notification message comprises the IP address of the first terminal device.

24. The method according to claim 23, wherein the second event registration request comprises a group identifier of the group.

25. The method according to claim 23 or 24, wherein the second event registration request further comprises an identifier of the terminal device in the group.

26. The method according to any one of claims 23 to 25, wherein the second event registration request further carries second indication information, and the second indication information indicates the core network element to return IP addresses of all terminal devices in the group at a time, or indicates the core network element to return, when obtaining IP addresses of any one or more terminal devices in the group, the obtained IP addresses of the terminal devices.

27. The method according to claim 26, wherein if the second indication information indicates the core network element to return the IP addresses of all the terminal devices in the group at a time, after determining the IP addresses of all the terminal devices in the group, the core network element sends a second event notification message to the capability exposure network element, wherein the second event notification message comprises the IP addresses of all the terminal devices in the group.

28. The method according to any one of claims 23 to 27, wherein the core network element is a session management network element, and the determining, by the core network element, an IP address of a first terminal device in the group comprises:
after receiving a session establishment request from the first terminal device, allocating, by the session management network element, the IP address to the first terminal device, wherein the session establishment request is used to request to establish a group session of the group.

29. The method according to claim 28, wherein before the sending, by the core network element, a second event notification message to the capability exposure network element, the method further comprises:
determining, by the session management network element, that a group identifier that is of the group at a network layer and that is carried in the second event registration request is consistent with a group identifier that is of the group and that is carried in the session establishment request, and the identifier that is of the terminal device in the group and that is carried in the second event registration request is consistent with an identifier that is of the first terminal device and that is carried in the session establishment request; and
sending, by the session management network element, the second event notification message to the capability exposure network element.

30. The method according to any one of claims 23 to 27, wherein the core network element is a unified data management network element, and the determining, by the core network element, an IP address of a first terminal device in the group comprises:
determining, by the unified data management network element, the IP address of the first terminal device based on subscription information of the first terminal device.

31. The method according to claim 30, wherein before the sending, by the core network element, a second event notification message to the capability exposure network element, the method further comprises:
determining, by the unified data management network element, that the group identifier that is of the group and that is carried in the second event registration request is consistent with a group identifier that is of the group and that is in the subscription information, and the identifier that is of the terminal device in the group and that is carried in the second event registration request is consistent with an identifier that is of the first terminal device and that is in the subscription information; and
sending, by the session management network element, the second event notification message to the capability exposure network element.

32. The method according to any one of claims 23 to 31, wherein the second event notification message further comprises either or both of the following: the identifier of the first terminal device and the group identifier of the group.

33. A method for obtaining an internet protocol (IP) address of a terminal device, wherein the method comprises:
receiving a first message from an application function network element, wherein the first message comprises a first IP address of a first terminal device, an identifier of the first terminal device, and a group identifier of a first group to which the first terminal device belongs; and
storing a correspondence between the identifier of the first terminal device, the group identifier of the first group to which the first terminal device belongs, and the first IP address of the first terminal device.

34. The method according to claim 33, wherein the method further comprises:
receiving a third message from the application function network element, wherein the third message comprises a second IP address of the first terminal device, the identifier of the first terminal device, and a group identifier of a second group to which the first terminal device belongs; and
storing a correspondence between the identifier of the first terminal device, the group identifier of the second group to which the first terminal device belongs, and the second IP address of the first terminal device.

35. The method according to claim 33 or 34, after the receiving a first message from an application function network element, the method further comprises:
if data needs to be sent to the first terminal device in the first group, sending an IP packet to the first terminal device by using a user plane network element, wherein a destination end address of the IP packet is the first IP address of the first terminal device.

36. The method according to claim 35, wherein before the sending an IP packet to the first terminal device by using a user plane network element, the method further comprises:
obtaining the first IP address of the first terminal device based on the identifier of the first terminal device and the group identifier of the first group to which the first terminal device belongs.

37. A communication system, wherein the communication system comprises a capability exposure network element and a core network element, wherein
the capability exposure network element is configured to: receive a first event registration request from an application function network element, wherein the first event registration request is used to request to obtain an internet protocol (IP) address of a terminal device in a group; and send a second event registration request to the core network element, wherein the second event registration request is used to request to obtain the IP address of the terminal device in the group;
the core network element is configured to: receive the second event registration request; and send a second event notification message to the capability exposure network element after determining an IP address of a first terminal device in the group, wherein the second event notification message comprises the IP address of the first terminal device in the group; and
the capability exposure network element is further configured to: receive the second event notification message, and send a first event notification message to the application function network element, wherein the first event notification message comprises the IP address of the first terminal device in the group.

38. The system according to claim 37, wherein the first event registration request comprises a group identifier of the group.

39. The system according to claim 37 or 38, wherein the first event registration request comprises one or more identifiers of one or more terminal devices in the group, and the one or more terminal devices in the group comprise the first terminal device.

40. The system according to any one of claims 37 to 39, wherein the first event notification message comprises either or both of the following: an identifier of the first terminal device in the group and the group identifier of the group.

41. The system according to any one of claims 37 to 40, wherein the first event registration request comprises first indication information, and the first indication information indicates the capability exposure network element to return IP addresses of all terminal devices in the group at a time, or indicates the capability exposure network element to return, when obtaining IP addresses of any one or more terminal devices in the group, the obtained IP addresses of the terminal devices.

42. The system according to claim 41, wherein when the first indication information indicates the capability exposure network element to return the IP addresses of all the terminal devices in the group at a time, the first event notification message comprises the IP addresses of all the terminal devices in the group.

43. The system according to any one of claims 37 to 42, wherein the communication system may further comprise the application function network element; and
the application function network element is configured to: send the first event registration request to the capability exposure network element; receive the first event notification message; and send a first message to another terminal device that is in the group and to which an IP address has been allocated, wherein the first message comprises the IP address of the another terminal device in the group, the identifier of the first terminal device, and the group identifier of the group.

44. The system according to claims 37 to 43, wherein the second event registration request comprises the group identifier of the group.

45. The system according to claims 37 to 44, wherein the second event registration request further comprises the identifiers of the one or more terminal devices.

46. The system according to any one of claims 37 to 45, wherein the group identifier of the group is a group identifier of the group at an application layer, and when sending the second event registration request to the core network element, the capability exposure network element is specifically configured to:
convert the group identifier of the group at the application layer into a group identifier of the group at a network layer; and send the second event registration request to the core network element, wherein the second event registration request comprises the group identifier of the group at the network layer.

47. The system according to any one of claims 37 to 46, wherein if the first event registration request does not comprise the identifiers of the one or more terminal devices in the group, before sending the second event registration request to the core network element, the capability exposure network element is configured to obtain an identifier of the terminal device in the group from a unified data management network element based on the group identifier.

48. The system according to any one of claims 37 to 47, wherein the group identifier of the group is the group identifier of the group at the application layer, the identifiers of the one or more terminal devices in the group are application layer identifiers, and when sending the second event registration request to the core network element, the capability exposure network element is specifically configured to:
convert the application layer identifiers of the one or more terminal devices in the group into network layer identifiers of the terminal devices, and convert the group identifier of the group at the application layer into the group identifier of the group at the network layer; and
send the second event registration request to the core network element, wherein the second event registration request comprises the network layer identifiers of the one or more terminal devices in the group and the group identifier of the group at the network layer.

49. The system according to any one of claims 37 to 48, wherein the second event registration request comprises second indication information, and the second indication information indicates the core network element to return the IP addresses of all the terminal devices in the group at a time, or indicates the core network element to return, when obtaining the IP address of the any one or more terminal devices in the group, the obtained IP addresses of the terminal devices.

50. The system according to claim 49, wherein if the second indication information indicates the core network element to return the IP addresses of all the terminal devices in the group at a time, the second event notification message comprises the IP addresses of all the terminal devices in the group.

51. The system according to any one of claims 37 to 49, wherein if the core network element is a session management network element, when determining the IP address of the first terminal device, the core network element is specifically configured to:
after receiving a session establishment request from the first terminal device, allocate the IP address to the first terminal device, wherein the session establishment request is used to request to establish a group session of the group.

52. The system according to claim 51, wherein when sending the second event notification message to the capability exposure network element, the core network element is specifically configured to:
after determining that the group identifier that is of the group and that is carried in the second event registration request is consistent with a group identifier that is of the group and that is carried in the session establishment request, or that an identifier that is of the terminal device in the group and that is carried in the second event registration request is consistent with an identifier that is of the terminal device and that is carried in the session establishment request,
send the second event notification message to the capability exposure network element.

53. The system according to any one of claims 37 to 49, wherein if the core network element is a unified data management network element, when determining the IP address of the first terminal device, the core network element is specifically configured to:
determine the IP address of the first terminal device based on subscription information of the first terminal device.

54. The system according to claim 53, wherein when sending the second event notification message to the capability exposure network element, the core network element is specifically configured to:
send the second event notification message to the capability exposure network element, after determining that the group identifier that is of the group and that is carried in the second event registration request is consistent with a group identifier that is of the group and that is in the subscription information, or that an identifier that is of the terminal device in the group and that is carried in the second event registration request is consistent with an identifier that is of the terminal device and that is in the subscription information.

55. The system according to any one of claims 37 to 54, wherein the second event notification message further comprises either or both of the following: the identifier of the first terminal device and the group identifier of the group.

56. The system according to any one of claims 43 to 55, wherein before sending the first message to the another terminal device that is in the group and to which the IP address has been allocated, the application function network element is further configured to determine the another terminal device that is in the group and to which the IP address has been allocated.

57. The system according to any one of claims 43 to 56, wherein when sending the first message to the another terminal device in the group to which the first terminal device belongs, the application function network element is specifically configured to send the first message to the another terminal device by using a user plane network element corresponding to the another terminal device.

58. The system according to claim 43 or 56, wherein the first message is an application layer message.

59. A communication apparatus, configured to implement the method according to any one of claims 1 to 10.

60. A communication apparatus, configured to implement the method according to any one of claims 11 to 22.

61. A communication apparatus, configured to implement the method according to any one of claims 23 to 32.

62. A communication apparatus, configured to implement the method according to any one of claims 33 to 36.

63. A communication apparatus, comprising a processor and a memory, wherein the memory stores instructions; and when the processor executes the instructions, the apparatus is enabled to perform the method according to any one of claims 1 to 10.

64. A communication apparatus, comprising a processor and a memory, wherein the memory stores instructions; and when the processor executes the instructions, the apparatus is enabled to perform the method according to any one of claims 11 to 22.

65. A communication apparatus, comprising a processor and a memory, wherein the memory stores instructions; and when the processor executes the instructions, the apparatus is enabled to perform the method according to any one of claims 23 to 32.

66. A communication apparatus, comprising a processor and a memory, wherein the memory stores instructions; and when the processor executes the instructions, the apparatus is enabled to perform the method according to any one of claims 33 to 36.

67. A computer-readable storage medium, wherein the computer-readable storage medium stores instructions; and when the instructions are run on a computer, the computer is enabled to perform the method according to any one of claims 1 to 10.

68. A computer-readable storage medium, wherein the computer-readable storage medium stores instructions; and when the instructions are run on a computer, the computer is enabled to perform the method according to any one of claims 11 to 22.

69. A computer-readable storage medium, wherein the computer-readable storage medium stores instructions; and when the instructions are run on a computer, the computer is enabled to perform the method according to any one of claims 23 to 32.

70. A computer-readable storage medium, wherein the computer-readable storage medium stores instructions; and when the instructions are run on a computer, the computer is enabled to perform the method according to any one of claims 33 to 36.

71. A computer chip, wherein the chip is connected to a memory, and the chip is configured to read and execute a software program stored in the memory, to perform the method according to any one of claims 1 to 36.

72. A computer program product comprising instructions, wherein when the computer program product runs on a computer, the computer is enabled to perform the method according to any one of claims 1 to 36.
